# EUROPÄISCHE PATENTSCHRIFT

(11) **EP 1 651 458 B1**
(45) Veröffentlichungstag und Bekanntmachung des Hinweises auf die Patenterteilung: **03.02.2010**
(21) Anmeldenummer: 04738687.5
(22) Anmeldetag: 09.06.2004
(51) Int. Cl.: B60J 5/04

(54) **KRAFTFAHRZEUGTÜR**
AUTOMOBILE DOOR
PORTIERE DE VEHICULE AUTOMOBILE

(30) Priorität: 24.07.2003 DE 10334143
(43) Veröffentlichungstag der Anmeldung: 03.05.2006
(73) Patentinhaber: Brose Fahrzeugteile GmbH & Co. KG, Coburg, 96450 Coburg (DE)
(72) Erfinder: WARTZACK, Sandro, 96103 Hallstadt (DE); SCHULTZ, Markus, 90425 Nürnberg (DE); POHL, Thomas, 91091 Grossenseebach (DE); STENZEL, Manfred, 96047 Bamberg (DE); DILLENBURGER, Ralph, E-08720 Vilafranca (ES); CUENCA, Jose, E-80191 Rubi (ES); SCHRAMM, Christian, E-08736 Guardiola de Font-Rubi (ES); FREI, Manfred, E-08810 St. Pere des Ribes/Barcelona (ES); SCHLECHTRIEMEN, Martin, D-96173 Oberhaid (DE)
(74) Vertreter: Baumgärtel, Gunnar
(86) Internationale Anmeldenummer: PCT/DE2004/001236
(87) Internationale Veröffentlichungsnummer: WO 2004/110799

(56) Entgegenhaltungen:
- DE-A- 19 854 775
- US-A- 5 050 351
- US-A- 6 086 139
- US-A- 6 112 470
- US-A1- 2003 096 510

## Beschreibung

Die Erfindung betrifft eine Kraftfahrzeugtür nach dem Oberbegriff des Anspruchs 1.

Eine derartige Kraftfahrzeugtür umfasst eine Außenbaugruppe, die eine Türaußenhaut aufweist und eine äußere Designfläche der Kraftfahrzeugtür bildet, sowie einen Aggregateträger, der auf der dem Fahrzeuginnenraum zugewandten Seite der Außenbaugruppe angeordnet und mit dieser unter Bildung einer Schnittstelle verbunden ist sowie elektrische und/oder mechanische Funktionskomponenten der Kraftfahrzeugtür trägt.

Die Außenbaugruppe der Kraftfahrzeugtür prägt demnach vor allem das von außerhalb des Kraftfahrzeugs sichtbare Erscheinungsbild und ist in der Regel in der gleichen Farbe lackiert wie die übrigen Bereiche der Fahrzeugkarosserie. Der auf der Innenseite der Außenbaugruppe angeordnete Aggregateträger dient insbesondere zur Aufnahme der elektrischen und mechanischen Funktionskomponenten, die an einer Kraftfahrzeugtür vorgesehen sind, wie z. B. einer Schlossbaugruppe, eines Fensterhebers, eines Lautsprechers, eines Seitenairbagmodules usw. Besonders vorteilhaft ist dabei die Vormontage sämtlicher derartiger elektrischer bzw. mechanischer Funktionskomponenten an dem Aggregateträger, so dass diese mit dem Aggregateträger zu einem komplett vormontierbaren und vorprüfbaren Türmodul zusammengefasst sind, das später mit der Außenbaugruppe verbunden wird.

Da der Aggregateträger bei geschlossener Fahrzeugtür vom Außenraum des Fahrzeugs her nicht sichtbar ist, bildet er keinen Bestandteil der äußeren Designfläche der Kraftfahrzeugtür. Auch vom Fahrzeuginnenraum her ist der Aggregateträger bei geschlossener Fahrzeugtür in der Regel nicht sichtbar, da er üblicherweise von einer Türinnenverkleidung überdeckt wird, die im Design an die weiteren Oberflächen des Fahrzeuginnenraums, wie z. B. die Armaturentafel, den Dachhimmel usw. angepasst ist.

Bei geöffneter Fahrzeugtür kann allerdings an der vorderen und/oder hinteren Stirnseite der Fahrzeugtür die Schnittstelle sichtbar sein, entlang der die Außenbaugruppe der Fahrzeugtür und der Aggregateträger miteinander verbunden sind. Unter der Schnittstelle wird dabei derjenige Bereich der Fahrzeugtür verstanden, entlang dem die Außenbaugruppe der Fahrzeugtür und der Aggregateträger aneinander anliegen. In diesem Bereich gibt es einen sprunghaften Übergang von der Außenbaugruppe, die an das äußere Design des Kraftfahrzeugs angepasst ist, zu dem Aggregateträger, der beispielsweise durch ein in neutraler Farbe lackiertes Türinnenblech gebildet wird und an den in der Regel keine besonderen Designanforderungen gestellt werden, da er (zumindest bei geschlossener Fahrzeugtür) weder vom Fahrzeugaußenraum noch vom Fahrzeuginnenraum her sichtbar ist.

In der gattungsgemäßen US-A 6,086,139 ist eine Kraftfahrzeugtür beschrieben, die einen selbsttragenden Türrahmen aufweist, an dem ein zur Verstellung einer Fensterscheibe der Kraftfahrzeugtür vorgesehener Fensterheber angeordnet ist. Der Türrahmen wird zum Fahrzeugaußenraum hin mittels einer Türaußenhaut und zum Fahrzeuginnenraum hin mittels einer Türinnenhaut abgedeckt. Zwischen Türaußenhaut und Türrahmen sowie zwischen dem Türrahmen und einem weiteren Rahmenbereich verläuft jeweils eine Dichtung.

Aus der DE 198 54 775 A1 ist eine Kraftfahrzeugtür mit einem Tür-Rahmenmodul bekannt, das einen zur Aufnahme mehrerer Funktionseinheiten der Kraftfahrzeugtür dienenden Modulträger aufweist und das zur Komplettierung der Fahrzeugtür in einen Türkasten eingesetzt wird.

Der Erfindung liegt das problem zugrunde, eine Kraftfahrzeugtür der eingangs genannten Art zu schaffen, bei der die Gestaltung des Übergangsbereiches von der Außenbaugruppe zum Aggregateträger der Kraftfahrzeugtür verbessert wird.

Dieses Problem wird erfindungsgemäß durch die Schaffung einer Kraftfahrzeugtür mit den Merkmalen des Anspruchs 1 gelöst.

Die erfindungsgemäße Lösung beruht auf der Erkenntnis, dass der unstetige, abrupte Übergang von der Türaußenbaugruppe zum Aggregateträger dadurch vermieden werden kann, dass eine an der Kraftfahrzeugtür ohnehin erforderliche Dichtung verwendet wird, um diesen Übergangsbereich zu überdecken. Hierbei kann es sich insbesondere um die sogenannte Türhauptdichtung handeln, mittels der die Kraftfahrzeugtür im geschlossenen Zustand an der Fahrzeugkarosserie, z.B. der sogenannten A-Säule und der B-Säule dichtend anliegt, um das Eindringen von Feuchtigkeit in das Kraftfahrzeug zu verhindern. Weiterhin kann diese Dichtung auch eine dichtende. Verbindung zwischen Aggregateträger und Außenbaugruppe herstellen.

Gemäß der Erfindung werden durch die besagte Dichtung weiterhin zumindest einige der Befestigungsmittel, z. B. in Form von Schrauben oder Nieten, abgedeckt, die zur Verbindung des Aggregateträgers mit der Türkarosserie dienen. Dabei geht es insbesondere um die Abdeckung derjenigen Befestigungsmittel bzw. derjenigen Bereiche der Befestigungsmittel, die im nicht abgedeckten Zustand für eine Betrachter der komplett montierten (geöffneten) Kraftfahrzeugtür sichtbar wären.

Ferner kann die Dichtung gegebenenfalls Elemente eines Referenzpunktsystems abdecken, das zur Ausrichtung der einzelnen Baugruppen der Fahrzeugtür dient. Hierdurch ist sichergestellt, dass die Schnittstelle, die Befestigungsmittel sowie die Elemente des Referenzpunktsystems vom Fahrzeuginnenraum her, also für einen im Fahrzeug sitzenden Insassen, beim Öffnen der Fahrzeugtür nicht sichtbar sind.

Eine bevorzugte Weiterbildung der Erfindung ist dadurch charakterisiert, dass die Dichtung insgesamt oder zumindest ein Abschnitt der Dichtung derart bewegbar ist, dass die der Verbindung von Aggregateträger und Außenbaugruppe dienenden Befestigungsmittel nicht mehr überdeckt sind und daher zur Betätigung mittels eines geeigneten Werkzeugs frei liegen. Hierdurch kann in einem Reparatur- bzw. Servicefall die Verbindung zwischen Aggregateträger und Türaußenhaut gelöst werden, um die Zugänglichkeit solcher Funktionskomponenten der Fahrzeugtür zu ermöglichen, die in dem zwischen Aggregateträger und Türaußenhaut gelegenen Türinnenraum (sogenannter Nassraum der Fahrzeugtür) angeordnet sind. Hierbei handelt es sich insbesondere um solche Fahrzeugkomponenten, die auf der der Türaußenhaut zugewandten (nassraumseitigen) Oberfläche des Aggregateträgers angeordnet sind. Dies sind typischerweise um solche Funktionskomponenten der Fahrzeugtür, die keine besondere Empfindlichkeit gegenüber Feuchtigkeit aufweisen, wie z. B. die Hebemechanik eines Fensterhebers, oder die in einem feuchtigkeitsdichten Gehäuse untergebracht sind. Diejenigen Funktionskomponenten der Fahrzeugtür, die nicht mit Feuchtigkeit in Berührung kommen dürfen, sind demgegenüber in der Regel auf der dem Fahrzeuginnenraum zugewandten (und damit der Türaußenhaut abgewandten) Oberfläche des Aggregateträgers (trockenraumseitige Oberfläche) angeordnet und dort von einer Türinnenverkleidung überdeckt.

Die vorstehend beschriebene besonders bevorzugte Weiterbildung der Erfindung eignet sich insbesondere bei Fahrzeugtüren mit abnehmbarer Außenbaugruppe, d. h. solchen Fahrzeugtüren, bei denen die Außenbaugruppe eine hinreichende Eigenstabilität aufweist, um die vom Aggregateträger abgenommene Außenbaugruppe während der Durchführung von Service- bzw. Reparaturarbeiten separat lagern zu können. Zur Verbindung von Außenbaugruppe und Aggregateträger sind in diesem Fall geeignete lösbare Befestigungsmittel vorzusehen. Darüber hinaus besteht der Vorteil, dass die stabile Außenbaugruppe zusammen mit der Fahrzeugkarosserie lackiert und anschließend der Aggregateträger mit der Außenbaugruppe verbunden werden kann . Außerdem besteht die Möglichkeit der einfachen Austauschbarkeit der Außenbaugruppe bei Bagatellschäden.

Gemäß einer Efindungsvariante erfolgt die zur Freigabe der Befestigungsmittel dienende Bewegung der Dichtung durch Umklappen der Dichtung. Hierzu weist die Dichtung einen Schwenkbereich, z. B. in Form eines Biege- oder Schamierbereiches auf, um den der die Befestigungselemente überdeckende Abschnitt der Dichtung geklappt werden kann, um die Befestigungselemente freizulegen. Die Dichtung ist dabei aufgrund ihrer Eigenelastizität bevorzugt derart vorgespannt, dass der der Abdeckung der Befestigungselemente dienende Abschnitt der Dichtung die Tendenz hat, sich über die Befestigungselemente zu legen, und entgegen dieser elastischen Vorspannung von diesen weggeklappt werden muss.

Nach einer anderen Ausführungsform der Erfindung lässt sich die Dichtung auf einer tragenden Basis, nämlich auf dem zugeordneten Befestigungsbereich der Kraftfahrzeugtür, an dem die Dichtung befestigt ist, derart verschieben, dass die von der Dichtung überdeckten, der Verbindung von Aggregateträger und Außenbaugruppe dienende Befestigungsmittel freigegeben werden.

Bei beiden vorgenannten Varianten besteht jeweils die Möglichkeit, die Dichtung durch eine Klapp- oder Schiebebewegung von den freizugebenden Befestigungsmitteln wegzubewegen, ohne dass die Dichtung von der Kraftfahrzeugtür gelöst werden muss. Sie wird lediglich durch Umklappen (nur eines Abschnittes der Dichtung) oder durch Verschieben in eine Position gebracht, in der sie die zu betätigenden Befestigungsmittel nicht mehr überdeckt.

Zur Befestigung der Dichtung an der Kraftfahrzeugtür dient ein Befestigungsbereich der Kraftfahrzeugtür, an dem die Dichtung beispielsweise formschlüssig befestigbar sein kann. Bei der formschlüssige Verbindung kann es sich einerseits um eine Steckverbindung handeln, indem an der Dichtung eine Aussparung vorgesehen ist, die auf einen entsprechenden stegartigen Befestigungsbereich der Kraftfahrzeugtür, z. B. einen abgewinkeltes Ende des Aggregateträgers, gesteckt werden kann. Andererseits kann an der Kraftfahrzeugtür auch eine separate Befestigungsschiene angeordnet sein, in die die Dichtung mit einem der Befestigung dienenden Abschnitt (Befestigungsfuß) einsetzbar bzw. einschiebbar ist.

Alternativ oder zusätzlich kann vorgesehen sein, dass die Dichtung mit einem der Befestigung dienenden Abschnitt zwischen der Außenbaugruppe und dem Aggregateträger eingeklemmt ist. Hierbei können ferner die der Befestigung von Aggregateträger und Außenbaugruppe dienenden Befestigungsmittel, z. B. in Form von Schrauben oder Nieten, auch die Dichtung durchgreifen und zusätzlich für deren Fixierung an dem entsprechenden Befestigungsbereich der Kraftfahrzeugtür sorgen. Insbesondere wenn die Dichtung in ihrem der Befestigung an der Kraftfahrzeugtür dienenden Abschnitt zur Herstellung einer Steckverbindung ausgebildet ist, kann es vorteilhaft sein, diesen Abschnitt der Dichtung mittels einer Metalleinlage zu versteifen.

Gemäß einer Ausführungsform der Erfindung ist die Dichtung vor dem Zusammenbau von Aggregateträger und Außenbaugruppe an dem Aggregateträger vormontiert. Hierbei kann die Dichtung an dem Aggregateträger zunächst in einer ersten Position (Vormontageposition) festgelegt werden, in der sie noch nicht die Befestigungsstellen überdeckt, die der Befestigung der Außenbaugruppe am Aggregateträger dienen. Erst nach der Verbindung von Außenbaugruppe und Aggregateträger wird die Dichtung dann in eine zweite Position (Funktionsposition) verschoben, in der sie die Befestigungsstellen überdeckt. Dies vereinfacht die Montage bei der Verbindung von Außenbaugruppe und Aggregateträger. Es ist dabei auch möglich, dass die Dichtung am Montageplatz der Fahrzeugtür von ihrer lediglich als Transportposition dienenden ersten Position abgenommen wird und nach Verbindung von Aggregateträger und Außenbaugruppe in ihrer als Funktionsposition dienenden zweiten Position erneut aufgebracht und fixiert wird. Nach einer anderen Variante wird die Dichtung an dem Aggregateträger bereits in ihrer Funktionsposition vormontiert; sie lässt sich jedoch zum Verbinden von Außenbaugruppe und Aggregateträger derart verschieben oder umklappen, dass die hierfür erforderlichen Befestigungsstellen freigegeben werden. Hierzu kann insbesondere die Elastizität der Dichtung ausgenutzt werden. Um die Befestigungsmittel zu betätigen, wird die Dichtung um ihre Längsachse aufgeklappt, so dass eine ausreichende Zugänglichkeit besteht. Gemäß einer weiteren Variante wird die Dichtung auf einen Befestigungsbereich des Aggregateträgers geklebt.

Gemäß einer zweiten Ausführungsform der Erfindung wird die Dichtung erst nach der Verbindung von Aggregateträger und Außenbaugruppe auf die Kraftfahrzeugtür aufgebracht und an dieser festgelegt.

Zur Befestigung der Dichtung können am Aggregateträger, insbesondere in dessen Randbereich, Formschlussbereiche vorgesehen (angeformt) sein, die eine formschlüssige Befestigung der Dichtung am Aggregateträger ermöglichen,

Weiterhin kann am Aggregateträger eine Türinnenverkleidung vorgesehen (vormontiert) sein, die den Aggregateträger im Sichtbereich zum Fahrzeuginnenraum hin abdeckt. Hierdurch werden die nicht in der Karosseriefarbe lackierten Teile der Tür, nämlich die zum Fahrzeuginnenraum weisenden Bereiche des Aggregateträgers, abgedeckt, soweit sie nicht bereits durch die Dichtung abgedeckt sind. Darüber hinaus können auch zusätzliche Rahmenblenden zur Abdeckung entsprechender Bereiche der Türkarosserie vorgesehen werden.

In einer bevorzugten Ausführungsform ist die Dichtung derart ausgestaltet, dass sie auch die Schnittstelle zwischen Aggregateträger und Türinnenverkleidung überdeckt. Hiermit kann ein aufwendiger design-angepasster Beschnitt der an dem Aggregateträger angeordneten Enden der Türinnenverkleidung entfallen. Bei einer Befestigung der Dichtung am Aggregateträger oder an der Außenbaugruppe weist die Dichtung hierzu einen entsprechenden Fortsatz auf, der von der Dichtung in Richtung auf die Türinnenverkleidung absteht und dort die Schnittstelle zum Aggregateträger überdeckt. Andererseits kann auch vorgesehen sein, dass die Dichtung an der Türinnenverkleidung befestigt ist und sich dann mit einem Fortsatz von dort zu der Schnittstelle zwischen Aggregateträger und Außenbaugruppe erstreckt, um erfindungsgemäß auch diese zu überdecken.

Wie weiter oben bereits erwähnt, eignet sich die vorliegende Erfindung insbesondere zur Anwendung bei einer Kraftfahrzeugtür, deren Türaußenhaut eine erhöhte Eigenstabilität aufweist, so dass sie nicht erst durch den Zusammenbau mit der Türinnenhaut (d. h. dem Aggregateträger) stabilisiert wird, sondern dass sie auch als von der Türinnenhaut bzw. dem Aggregateträger separierte Baugruppe handhabbar und lagerbar ist. Hierzu weist die Außenbaugruppe im Bereich ihres äußeren Randes Verstärkungsbereiche auf, so dass diese durch die Kombination einer Türaußenhaut (in Form eines dünnen Türaußenblechs oder einer aus Kunststoff bestehenden Türaußenbeplankung) mit den Versteifungsbereichen eine solche Eigensteifigkeit besitzt, dass sie als separate, von dem Aggregateträger unabhängige Türbaugruppe handhabbar ist.

Hierdurch kann die Außenbaugruppe, vor dem Zusammenbau mit dem Aggregateträger separat lackiert werden. Dies ermöglicht beispielsweise eine gemeinsame Lackierung der Außenbaugruppe der Fahrzeugtür zusammen mit der übrigen Karosserie des zugehörigen Kraftfahrzeugs in einem einheitlichen Lackierprozess, so dass eine einheitliche Farbgebung der Kraftfahrzeugkarosserie einerseits und der Außenhaut der zugehörigen Fahrzeugtüren andererseits gewährleistet ist. Gleichzeitig können die weiteren Bestandteile der Kraftfahrzeugtür, insbesondere der Aggregateträger, völlig unabhängig von der Außenbaugruppe an einem beliebigen Ort hergestellt, mit weiteren Funktionskomponenten versehen und vorgeprüft werden, wobei ein aus dem Aggregateträger und den daran vormontierten Funktionskomponenten gebildetes Türmodul entsteht.

Der Aggregateträger mit den daran vormontierten Türkomponenten wird zum Montageplatz des Kraftfahrzeugs transportiert, wo der Aggregateträger und die Außenbaugruppe der Fahrzeugtür (vorzugsweise lösbar) miteinander verbunden werden. Die hierdurch komplettierte Fahrzeugtür kann dann in das hierfür vorgesehene Kraftfahrzeug eingebaut werden.

Weiterhin besteht die Möglichkeit, zu einem späteren Zeitpunkt, in einem Reparatur- bzw. Servicefall, die Außenbaugruppe wieder von dem Aggregateträger zu lösen, um von der Außenseite des Fahrzeugs her Zugang zu solchen Türkomponenten zu erhalten, die auf der der Außenbaugruppe zugewandten nassraumseitigen Oberfläche des Aggregateträgers angeordnet sind. Dies wird erleichtert durch die oben beschriebenen Vorzugsvarianten bei der Ausbildung der die Befestigungsmittel von Außenbaugruppe, und Aggregateträger überdeckenden Dichtung, welche eine Freigabe der Befestigungsmittel zur Betätigung durch ein Werkzeug ermöglicht.

Die Verstärkungsbereiche stehen von der Außenbaugruppe bevorzugt nach innen, d. h. in Richtung auf den Aggregateträger ab und laufen entlang des Randes der Außenbaugruppe um. Dabei können die Verstärkungsbereiche eine separate Baugruppe bilden, die an der Türaußenhaut befestigt ist. Die entsprechende separate Baugruppe bildet ein rahmenartiges Zwischen- bzw Verstärkungsblech, das einerseits an der Türaußenhaut befestigt wird und über das andererseits die Türaußenhaut mit der Türinnenhaut (dem Aggregateträger) der Fahrzeugtür verbunden wird.

Die Verstärkungsbereiche umfassen insbesondere ein vorderes und ein hinteres Verstärkungselement, das sich an der vorderen und hinteren Stirnseite jeweils entlang der vertikalen Fahrzeugachse (bezogen auf den in ein Kraftfahrzeug eingebauten Zustand der Tür) erstreckt und das die Stirnseite der Fahrzeugtür bildet. Ferner können zusätzliche Verstärkungselemente am oberen Rand der Türaußenhaut (Türschachtverstärkung unterhalb der Fensteröffnung) sowie am unteren Rand der Türaußenhaut (zum Fahrzeugboden hin) vorgesehen sein, die sich jeweils in Fahrzeuglängsrichtung erstrecken.

Die Verstärkungsbereiche können gemäß einer Ausführungsform einen einteiligen Verstärkungsrahmen bilden, der als kompletter, z. B. vollständig umlaufender oder U-förmiger Verstärkungsrahmen auf die Türaußenhaut aufgesetzt wird. Andererseits können die Verstärkungsbereiche aber auch durch einzelne, separate Verstärkungselemente gebildet werden, die separat an der Außenbaugruppe befestigt werden und dann dort nach der Montage einen Verstärkungsrahmen bilden.

Zur Befestigung an der Türaußenhaut weisen die Verstärkungsbereiche vorzugsweise einen abgewinkelten Endabschnitt auf, der von einem umgelegten (gefalzten) Ende der Türaußenhaut umgriffen wird. Zusätzlich kann die Verbindung durch Kleben oder Schweißen gesichert werden.

Zur Befestigung der Türaußenhaut mit dem Aggregateträger über die Verstärkungsbereiche weisen diese einen weiteren abgewinkelten Abschnitt auf, der zur Befestigung des Aggregateträgers dient.

Bei einer aus Kunststoff oder aus Metall, insbesondere Blech, bestehenden Außenbaugruppe können die Verstärkungsbereiche auch unmittelbar an der Türaußenhaut angeformt sein, z.B. im Fall von Metall, durch Tiefziehen oder Prägen.

Aggregateträger erstreckt und der Versteifung der Fahrzeugtür im Hinblick auf Crashanforderungen dient.

Der Aggregateträger kann eine Rahmenstruktur mit einem integrierten Fensterrahmen aufweisen. Diese Rahmenstruktur umgibt eine großflächige Trägerplatte des Aggregateträgers, die zur Aufnahme der elektrischen und mechanischen Funktionskomponenten der Fahrzeugtür dient, und bildet darüber hinaus eine Fensteröffnung.

Der Aggregateträger ist vorzugsweise derart großflächig ausgebildet, dass er sich bis zu den seitlichen Rändern der Kraftfahrzeugtür erstreckt. Hierdurch unterscheidet sich der Aggregateträger von den üblichen Türmodulträgem, die auf eine Aussparung im Türinnenblech einer Kraftfahrzeugtür aufgesetzt werden und dementsprechend vollständig innerhalb der äußeren Ränder der Kraftfahrzeugtür liegen und sich dementsprechend bis zu diesen hin erstrecken.

Auch der Aggregateträger kann im Bereich seines äußeren Randes Verstärkungsbereiche aufweisen, die vorzugsweise nach außen, d.h. in Richtung auf die Außenbaugruppe, von diesem abstehen und die entweder einstückig an diesem angeformt sind oder durch separate Verstärkungselemente gebildet werden können. Die Verstärkungsbereiche des Aggregateträgers können gleichzeitig einen Teil einer Rahmenstruktur des Aggregateträgers bilden.

Weiterhin können die Außenbaugruppe der Fahrzeugtür und der Aggregateträger über ihre Verstärkungsbereiche aneinander anliegen, wobei die Verstärkungsbereiche weiterhin Befestigungsstellen zur Verbindung von Außenbaugruppe und Aggregateträger aufweisen.

Der Aggregateträger kann unabhängig von der Außenbaugruppe und unabhängig von der übrigen Karosserie des zugehörigen Kraftfahrzeugs an einem separaten Ort und mit einer von der Farbgebung des Kraftfahrzeugs unabhängigen Farbe hergestellt werden. Denn die Außenansicht der erfindungsgemäß ausgestalteten Kraftfahrzeugtür wird durch die Außenbaugruppe bestimmt, die dementsprechend gemeinsam mit den übrigen Bereichen der Fahrzeugkarosserie in einer einheitlichen Farbe zu lackieren ist.

Zur Stabilisierung des Überlappungsbereiches, in dem der Aggregateträger und die Außenbaugruppe (insbesondere über Verstärkungsbereiche der Außenbaugruppe) miteinander verbunden sind, erfolgt die Verbindung entlang eines im Querschnitt mindestens einfach abgewinkelten Überlappungsbereiches, wobei Befestigungsmittel zur Verbindung von Aggregateträger und Außenbaugruppe beidseits des Winkels vorgesehen sind. Ein derartig stabil ausgebildeter, der Verbindung von Aggregateträger und Außenbaugruppe dienender Überlappungsbereich eignet sich insbesondere zur Aufnahme eines Türschlosses, das an diesem Überlappungsbereich befestigt wird. Da an einem Türschloss beim Zuschlagen der Fahrzeugtür oder in einem Crash-Fall erhebliche Kräfte auftreten können, die in die Fahrzeugkarosserie weitergeleitet werden, ist eine entsprechend stabile Befestigung des Türschlosses an der Kraftfahrzeugtür von Bedeutung.

Gemäß einer bevorzugten Weiterbildung der Erfindung ist das Türschloss an dem Aggregateträger vormontiert, d. h., es wird an diesem vor dem Zusammenbau mit der Außenbaugruppe befestigt, und wird nach dem Zusammenbau von Aggregateträger und Außenbaugruppe noch zusätzlich an jenem Überlappungsbereich befestigt. Durch die Vormontage des Türschlosses an dem Aggregateträger ist gewährleistet, dass das Türschloss nach dem Zusammenbau von Aggregateträger und Außenbaugruppe in einer korrekten Position innerhalb der Fahrzeugtür angeordnet ist und dann lediglich noch die für die zusätzliche Befestigung am Überlappungsbereich vorgesehenen Befestigungselemente betätigt werden müssen.

Weiterhin kann im Überlappungsbereich von Aggregateträger und Außenbaugruppe ein Scharnierteil befestigt sein, über das die Fahrzeugtür aufklappbar bzw. schwenkbar mit der Türkarosserie verbunden wird. Durch die Befestigung des Scharnierteiles an einem entsprechend verstärkten Überlappungsbereich kann die Verwendung zusätzlicher Verstärkungsteile bei der Befestigung des Scharnieres an der Kraftfahrzeugtür entfallen. Selbstverständlich ist jedoch auch eine Befestigung außerhalb des Überlappungsbereiches unter Verwendung geeigneter Verstärkungsteile möglich. Hierdurch kann eine direkte Krafteinleitung auf das Türinnentell sichergestellt werden, wodurch es zu einer Entlastung der Verbindungsstellen zwischen Aggregateträger und Außenbaugruppe kommt. Die direkte Anbindung des Schlosses gewährleistet darüber hinaus eine unmittelbare Krafteinleitung in die Fahrzeugkarosserie.

Zur Stabilisierung und Verstärkung der Verbindung von Aggregateträger und Außenbaugruppe kann insbesondere der Aggregateträger zumindest an einem Teil der Befestigungsstellen, die der Verbindung mit der Außenbaugruppe dienen, umgelegt sein, so dass das Material des Aggregateträgers an den Befestigungsstellen doppellagig ausgeführt ist. Zwischen den Befestigungsstellen erfolgt vorzugsweise keine Doppelung des Materials des Aggregateträgers, sondern eine Ausbildung dieses Randbereichs derart, dass dieser zur Aufnahme bzw. Befestigung der Türdichtung geeignet ist.

Weitere Merkmale und Vorteile der Erfindung werden bei der nachfolgenden Beschreibung von Ausführungsbeispielen anhand der Figuren deutlich werden.

Es zeigen:
- Fig. 1a - 1d: vier unterschiedliche perspektivische Ansichten einer Kraftfahrzeugtür bestehend aus einem Aggregateträger und einer hiermit verbundenen Außenbaugruppe;
- Fig. 2a: den Aggregateträger aus den Figuren 1a bis 1d;
- Fig. 2b: die Außenbaugruppe aus den Figuren 1a bis 1d;
- Fig. 3: eine Fahrzeugtür gemäß den Figuren 1a bis 1d in Explosionsdarstellung;
- Fig.4a: eine schematische Darstellung des Verbindungsbereiches zwischen Außenbaugruppe und Aggregateträger;
- Fig. 4b: eine detailliertere Darstellung des Verbindungsbereiches gemäß Figur 4a,
- Fig. 5a: eine Darstellung des Verbindungsbereiches zwischen Aggregateträger und Außenbaugruppe mit einer im Verbindungsbereich angeordneten Schlossbaugruppe;
- Fig. 5b: eine Abwandlung der Anordnung aus Figur 5a;
- Fig. 6a: eine Darstellung des Verbindungsbereiches von Aggregateträger und Außenbaugruppe mit einem zusätzlichen Scharnierteil im Verbindungsbereich;
- Fig. 6b: eine Abwandlung der Anordnung aus Figur 6a;
- Fig. 7a - 7c: eine Weiterbildung des Verbindungsbereiches zwischen Aggregateträger und Außenbaugruppe mit speziellen Befestigungsbereichen für die Türdichtung einerseits und für die Verbindung zwischen Außenbaugruppe und Aggregateträger andererseits;
- Fig. 8: ein erstes Ausführungsbeispiel für die Befestigung einer Türdichtung im Verbindungsbereich von Aggregateträger und Außenbaugruppe;
- Fig. 9: ein zweites Ausführungsbeispiel für die Befestigung einer Türdichtung im Verbindungsbereich von Aggregateträger und Außenbaugruppe;
- Fig. 10: ein drittes Ausführungsbesipiel für die Befestigung einer Türdichtung im Verbindungsbereich von Aggregateträger und Außenbaugruppe;
- Fig. 11: ein viertes Ausführungsbeispiel für die Befestigung einer Türdichtung im Verbindungsbereich von Aggregateträger und Außenbaugruppe;
- Fig. 12: ein fünftes Ausführungsbeispiel für die Befestigung einer Türdichtung im Verbindungsbereich von Aggregateträger und Außenbaugruppe.

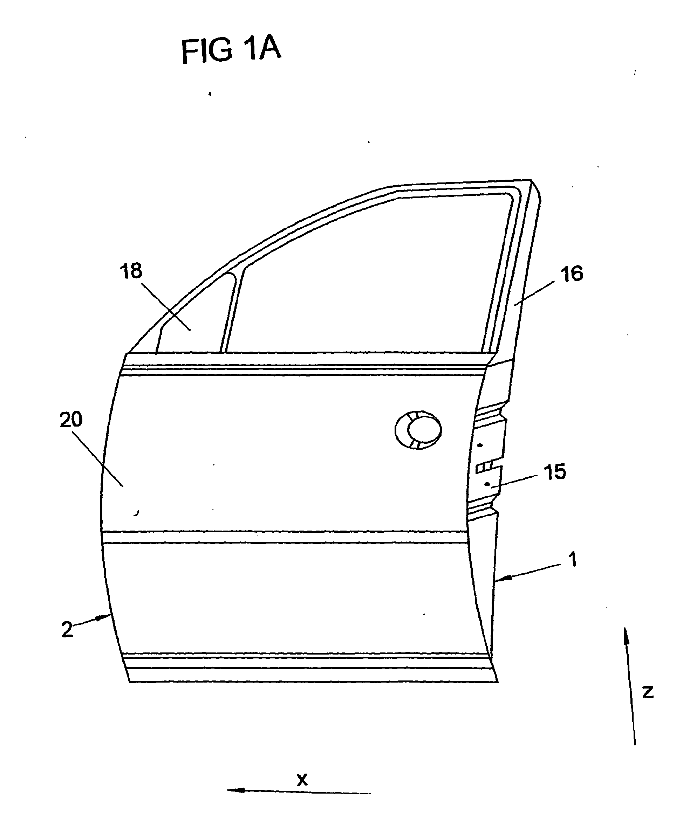

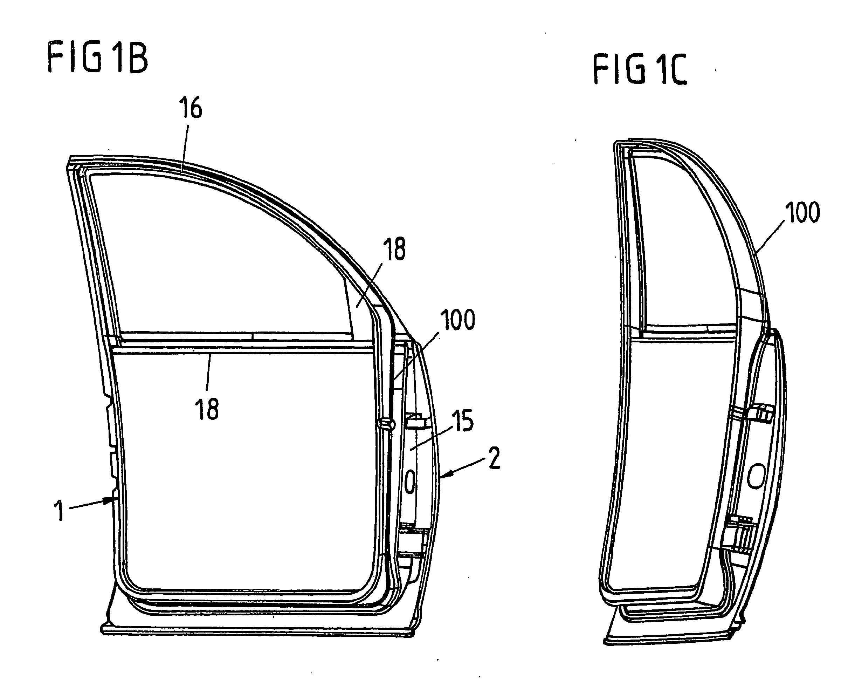

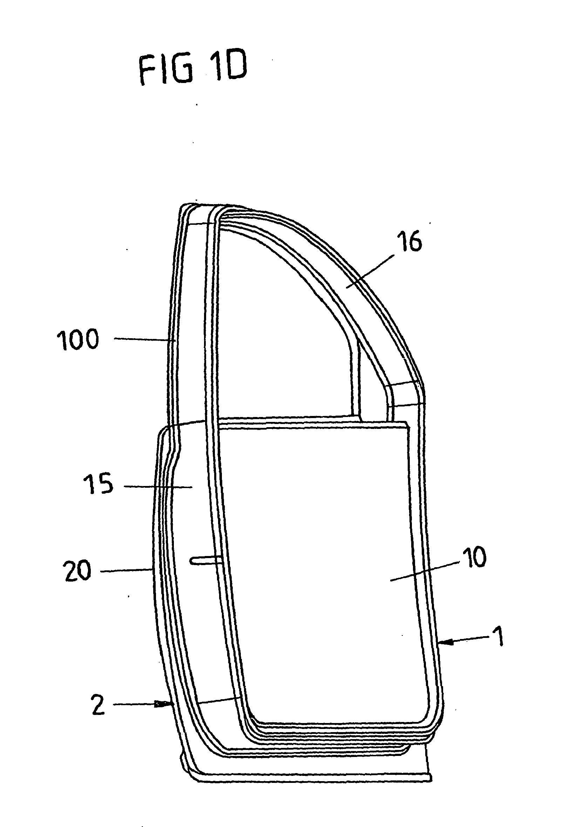

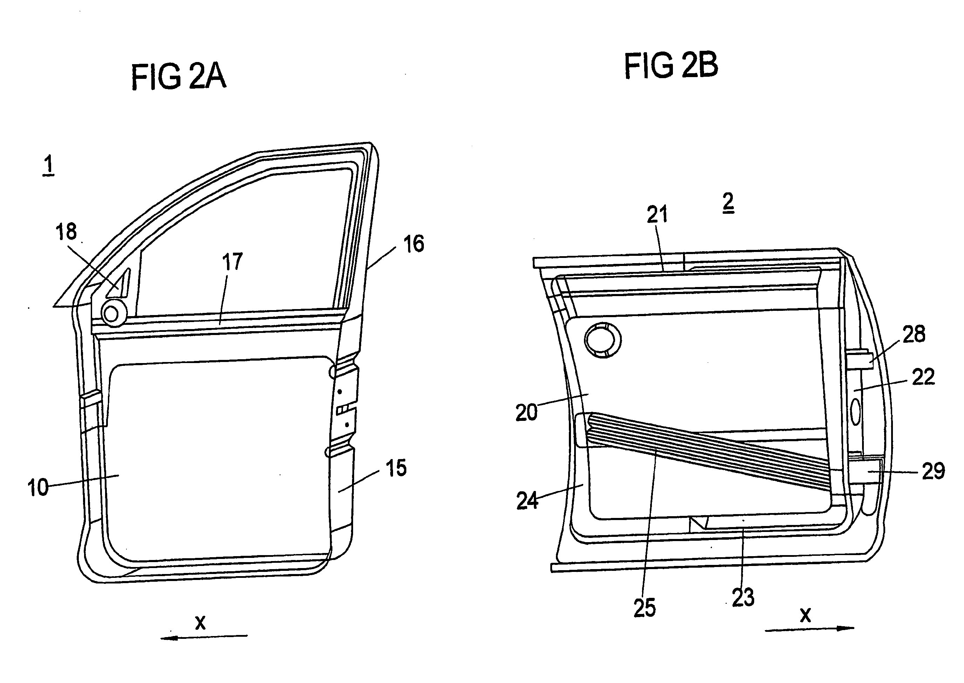

In den Figuren 1a bis 1d ist eine Fahrzeugtür dargestellt, die aus einem in Figur 2a separat gezeigten Aggregateträger 1 und einer in Figur 2b separat gezeigten Außenbaugruppe 2 besteht.

Der Aggregateträger 1 wird gebildet durch eine aus Metall (Blech) bestehende Trägerplatte 10, an deren unterem, sowie in Fahrzeuglängsrichtung x vorderem und hinterem Randbereich jeweils nach außen, d.h. in Richtung auf die Außenbaugruppe 2 abstehende Verstärkungsbereiche 15 durch Prägen oder Tiefziehen angeformt sind. Diese Verstärkungsbereiche 15 bilden zugleich einen die Trägerplatte 10 U-förmig umschließenden Rahmen. Darüber hinaus weist die Trägerplatte 10 einen verstärkten Brüstungsbereich 17 auf. An den U-förmigen Verstärkungs- und Rahmenbereich 15 des Aggregateträgers 1 schließt sich nach oben hin ein Fensterrahmen 16 an, der in üblicher Weise eine Öffnung für eine Fensterscheibe definiert und umschließt.

Der Aggregateträger 1 weist darüber hinaus zwischen Türbrüstung 17 und Fensterrahmen 16 ein sogenanntes Spiegeldreieck 18 auf. Ferner ist an den umlaufenden Rahmenteilen 15, 16 des Aggregateträgers 1 eine Dichtung 100 vormontiert, die einerseits als Türhauptdichtung dient, über die also die Fahrzeugtür im geschlossenen Zustand an der Türkarosserie anliegt. Andererseits dient die Dichtung 100 auch zur Abdichtung der Verbindung zwischen Aggregateträger 1 und Außenbaugruppe 2. Ferner kann die Dichtung auch als Dämpfungsmittel im Hinblick auf Außengeräusche (Schall) dienen.

Die Außenbaugruppe 2 wird gebildet durch eine Außenbeplankung 20 (Türaußenhaut), die im Bereich ihres äußeren Randes umlaufend mit einem Verstärkungsblech in Form eines Verstärkungsrahmens 21, 22, 23, 24 versehen ist. Jeder der vier Bereiche 21, 22, 23, 24 des Verstärkungsbleches verläuft entlang eines Randbereiches der Außenhaut 10 und steht jeweils nach innen, d.h. in Richtung auf den Aggregateträger 1, von der Türaußenhaut 2 ab. Aufgrund der Verstärkungsbereiche 21 bis 24 weist die Außenbaugruppe 2 eine hinreichende Eigensteifigkeit auf, so dass sie unabhängig von dem Aggregateträger 1 gehandhabt und lackiert werden kann.

Zwischen den beiden in Fahrzeuglängsrichtung x betrachtet seitlichen (stirnseitigen), entlang der vertikalen Fahrzeugachse z erstreckten Verstärkungsbereichen 22, 24 der Außenbaugruppe 2 erstreckt sich ein Querträger 25 (Seitenaufprallträger), der der Versteifung der Außenbaugruppe 2 und damit der Fahrzeugtür insgesamt im Hinblick auf einen Seiten-Crash dient. Der längserstreckte Querträger 25 ist mit seinem vorderen und hinteren Ende an jeweils einem der beiden stimseitigen Verstärkungsbereiche 22, 24 befestigt. Darüber hinaus sind an dem in Fahrzeuglängsrichtung x vorderen stimseitigen Verstärkungsbereich 22 zwei Scharniere 28, 29 angeordnet, über die die Fahrzeugtür klappbar mit einer Fahrzeugkarosserie verbindbar ist.

Aufgrund der Eigensteifigkeit der Außenbaugruppe 2 der Fahrzeugtür kann diese unabhängig von dem Aggregateträger hergestellt, mit Schamieren 28, 29 versehen und an ihrer Außenbeplankung 20 lackiert werden. Die Lackierung erfolgt vorzugsweise zusammen mit den übrigen Bereichen der Fahrzeugkarosserie in einem einheitlichen Lackierprozess, so dass Abweichungen im Farbton der Fahrzeugtür einerseits und der übrigen Bereiche der Fahrzeugkarosserie andererseits ausgeschlossen sind. Die erwähnten Herstellungs-, Montage- und Lackierschritte können beim Hersteller des entsprechenden Kraftfahrzeugs vorgenommen werden.

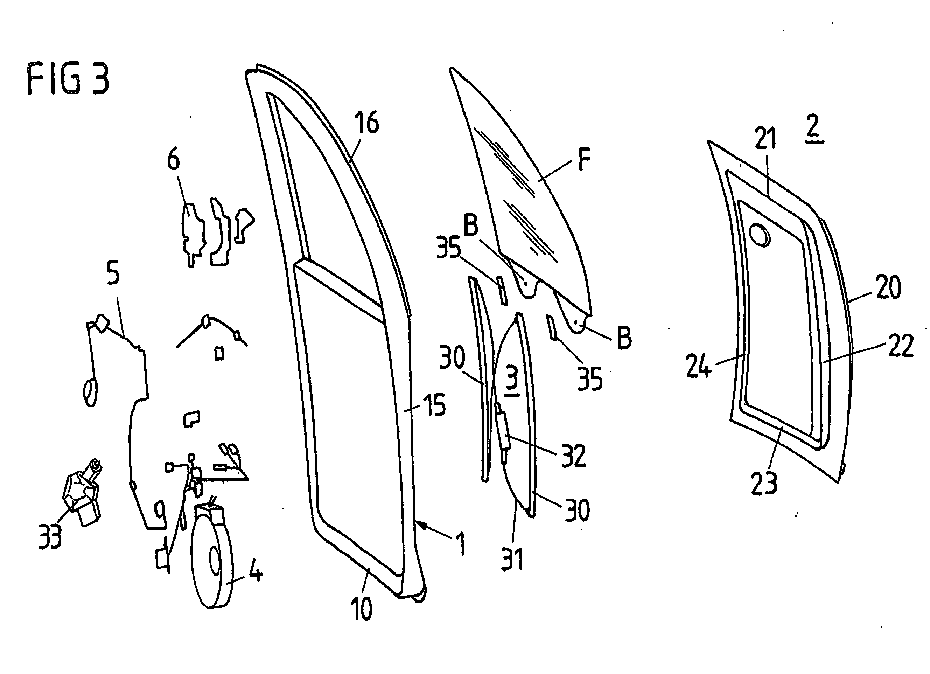

Unabhängig davon kann an einem separaten Ort, z. B. bei einem Zulieferer des entsprechenden Fahrzeugherstellers, der Aggregateträger 1 vorbereitet werden. An der Trägerplatte 10 des Aggregateträgers 1 werden hierzu die an der Kraftfahrzeugtür vorgesehenen elektrischen und mechanischen Funktionskomponenten vormontiert, die nachfolgend anhand Figur 3 noch näher beschrieben werden werden. Darüber hinaus wird an dem Aggregateträger 1 entlang dessen Rahmenteilen 15, 16 eine Türdichtung 100 aufgebracht, die unter anderem als Türhauptdichtung für eine dichte Anlage der Kraftfahrzeugtür an der Fahrzeugkarosserie sorgt. Die Farbe des Aggregateträgers 1 kann unabhängig von der Farbe der Außenbaugruppe 2 gewählt werden und muss insbesondere nicht mit der Farbe übereinstimmen, in der die Karosserie des entsprechenden Kraftfahrzeugs lackiert ist. Vielmehr eignet sich hierfür eine neutrale Farbe, wie z. B. Weiß, Grau oder Schwarz, bzw. die Innenraumfarbe des entsprechenden Kraftfahrzeugs.

Anhand der Explosionsdarstellung in Figur 3 ist der Aufbau der in den Figuren 1a bis 1b dargestellten Kraftfahrzeugtür nochmals verdeutlicht. Der Aggregateträger 1 mit einer Trägerplatte 10 und Rahmenbereichen 15, 16, die einerseits die Trägerplatte 10 umfassen und andererseits einen Fensterrahmen definieren, dient zur Aufnahme eines elektrischen Fensterhebers 3, eines Lautsprechers 4, einer Mehrzahl von Kabelsträngen 5 sowie einer weiteren Baugruppe 6. Die mechanischen Elemente des Fensterhebers 3, nämlich Führungsschienen 30, ein Bowdenzug 31, eine Getriebebaugruppe 32 sowie mittels des Bowdenzugs 31 entlang der Führungsschienen 30 geführte Mitnehmer 35 sind auf der Nassraumseite der Trägerplatte 10, d.h. auf ihrer der Außenbaugruppe 2 zugewandten Oberfläche angeordnet. An den beiden Mitnehmern 35 des Fensterhebers 3 ist eine Fensterscheibe F befestigbar, die hierfür an ihrer Unterseite zwei Befestigungsbereiche B mit je einer Befestigungsöffnung aufweist.

Auf der Trockenraumseite, d.h. auf der dem Fahrzeuginnenraum zugewandten Seite, des Aggregateträgers 1 sind an dessen Trägerplatte 10 der Antriebsmotor 33 des Fensterhebers, die Lautsprechereinheit 4, die Kabelstränge 5 sowie die weitere Baugruppe 6 montiert. Als weitere Baugruppen, die an der Trägerplatte 10 vormontiert werden können, eignen sich beispielsweise eine Schlossbaugruppe, ein Seitenairbagmodul, eine Armlehne usw.

Die vorgenannten Funktionselemente 3, 4, 5, 6 der Fahrzeugtür werden an der Trägerplatte 10 vormontiert, bevor diese mit der Außenbaugruppe 2 verbunden wird. Das gilt auch für die Fensterscheibe F, die über ihre Befestigungsbereiche B und die Mitnehmer 35 mit dem Fensterheber 3 in Verbindung steht. Der Aggregateträger 1, die weiteren Funktionselemente 3 bis 6 sowie die Fensterscheibe F bilden also im vormontierten Zustand ein möglichst komplettes Türmodul, welches alle vormontierbaren Türelemente außer der Türaußenhaut umfasst.

Die Türaußenhaut 20 ist in eine separate Außenbaugruppe 2 der Fahrzeugtür integriert, die aufgrund ihrer Versteifungsbereiche 21 bis 24 eine hinreichende Eigensteifigkeit aufweist, um unabhängig von dem Aggregateträger 1 gehandhabt und insbesondere lackiert zu werden.

Der Zusammenbau des Aggregateträgers 1 und der daran vormontierten Funktionskomponenten 3 bis 6, F mit der Außenbaugruppe 2 bildet den abschließenden Montageschritt bei der Herstellung der Fahrzeugtür insgesamt.

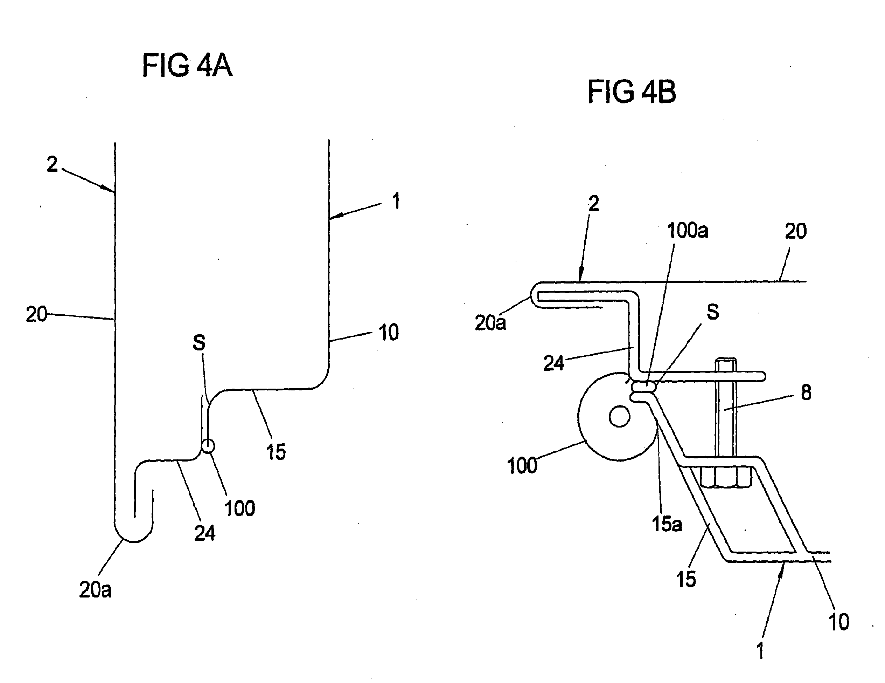

Figur 4a zeigt schematisch die Schnittstelle S zwischen Aggregateträger 1 und der Außenbaugruppe 2 mit Türaußenhaut 20. Die Türaußenhaut 20 weist an ihrem Rand 20a einen nach innen umgelegten Materialbereich auf, der der Befestigung eines hinteren Verstärkungsbereiches 24 dient. Der abgewinkelte Verstärkungsbereich 24 kann dabei zwischen der Türaußenhaut 20 und deren umgelegtem Randbereich 20a eingeklemmt sein. Ergänzend oder alternativ kann eine Verbindung durch Kleben, Schweißen, Schrauben, Nieten oder sonstige geeignete Befestigungsmethoden erfolgen. Die weiteren Verstärkungsbereiche 21, 22, 23 der Außenbaugruppe 2 (vergleiche Figur 2b) sind in entsprechender Weise mit der Außenbeplankung 20 verbunden und sorgen für die besondere Eigensteifigkeit der Außenbaugruppe 2.

Die Verstärkungsbereiche 21 bis 24 der Außenbaugruppe 2 bilden zugleich einen Teil des Türinnenblechs der Kraftfahrzeugtür, das durch die Trägerplatte 10 des Aggregateträgers 1 vervollständigt wird. Die Trägerplatte 10 des Aggregateträgers 1 weist an ihrem seitlichen Randbereich nach außen, d.h., in Richtung auf die Außenbaugruppe 2 abstehende Verstärkungsbereiche 15 auf, die zugleich Rahmenbereiche (Rahmenteile) des Aggregateträgers 1 bilden und der Befestigung des Aggregateträgers 1 an der Außenbaugruppe 2 dienen.

Der Verstärkungsbereich 15 des Aggregateträgers 1 sowie der Verstärkungsbereich 24 der Außenbaugruppe 2 sind jeweils derart abgewinkelt, dass sie aneinander anliegende Flächen bilden, über die die Außenbaugruppe 2 mit dem Aggregateträger 1 verbunden ist. Die entsprechende Schnittstelle ist durch die Dichtung 100 abgedeckt, die zugleich als Türhauptdichtung dient.

Weitere Einzelheiten einer konkreten Ausbildung der Schnittstelle S zwischen Aggregateträger 1 und Außenbaugruppe 2 sind Figur 4b entnehmbar. Danach sind der Verstärkungsbereich 15 des Aggregateträgers 1 sowie der Verstärkungsbereich 24 der Außenbaugruppe 2 durch Befestigungsmittel 8 in Form von Schrauben miteinander verbunden, die jeweils Befestigungsöffnungen in den beiden Verstärkungsbereichen 15, 24 durchgreifen.

Weiterhin weist der Verstärkungsbereich 15 des Aggregateträgers 1 an seinem freien Ende einen Befestigungsbereich 15a in Form eines Befestigungsflansches auf, auf den die Dichtung 100 formschlüssig aufsteckbar ist, so dass sie an dem Aggregateträger 1 vormontiert werden kann. Nach der Verbindung von Aggregateträger 1 und Außenbaugruppe 2 wird die Dichtung 100 außerdem mit einem Abschnitt 100a zwischen den Befestigungsbereichen 15, 24 eingeklemmt. Hierdurch ist zum einen die Verbindung zwischen Aggregateträger 1 und Außenbaugruppe 2 abgedichtet und außerdem wird die Dichtung 100 sicher gehalten. Anhand der Figuren 4a und 4b ist ferner erkennbar, dass die Dichtung 100 die Schnittstelle S zwischen Aggregateträger 1 und Außenbaugruppe 2 überdeckt, so dass die Schnittstelle S für einen Betrachter der Fahrzeugtür, bei geöffneter Fahrzeugtür, nicht sichtbar ist und zudem abgedichtet ist.

Das voranstehend beschriebene Ausführungsbeispiel einer Türbaugruppe bestehend aus einem Aggregateträger 1 und einer Außenbaugruppe 2 kann in vielfältiger Weise abgewandelt werden.

So kann der zweiteilige Aufbau auch für rahmenlose Fahrzeugtüren gewählt werden; in diesem Fall weist der Aggregateträger 1 keinen Fensterrahmen auf.

Die Verstärküngsbereiche 15 des Aggregateträgers 1 einerseits und die Verstärkungsbereiche 21 bis 24 der Außenbaugruppe andererseits können aus unterschiedlichen Materialien bestehen und unabhängig davon auch unterschiedliche Materialstärken aufweisen. In der Regel ist bei dem Aggregateträger 1 eine höhere Steifigkeit erforderlich als bei der Außenbaugruppe 2, so dass deren Verstärkungsbereiche 21 bis 24 mit geringerer Materialstärke und/oder aus einem leichteren, weniger stabilen Material ausgebildet werden können.

Die Verstärkungsbereiche 15, 22 bis 24 des Aggregateträgers 1 sowie der Außenbaugruppe 2 können darüber hinaus zur Erleichterung der Positionierung der beiden Baugruppen 1, 2 zueinander Führungsbereiche aufweisen, so dass der Zusammenbau vereinfacht wird. Ferner können die Verstärkungsbereiche auch als Scheibenführungen für eine absenkbare Fensterscheibe dienen und der als Fensterrahmen dienende Abschnitt des Aggregateträgers kann einen Glaskanal aufweisen.

Die Dichtung, die an der Schnittstelle von Aggregateträger 1 und Außenbaugruppe 2 angeordnet ist, kann gleichzeitig auch zur Verbindung der Außenbaugruppe 2 mit dem Aggregateträger 1 dienen. Hierzu sind in die Dichtung entsprechende Befestigungsmittel integriert, die beim Eindrücken der Dichtung in den Bereich der Schnittstelle S zwischen Aggregateträger 1 und Außenbaugruppe 2 wirksam werden, z. B. indem sie in entsprechende Befestigungsstellen an dem Aggregateträger 1 und/oder der Außenbaugruppe 2 eingreifen und hierdurch eine form- und/oder kraftschlüssige Verbindung herstellen. Andererseits können auch von der Dichtung separate Befestigungsmittel bereits vor dem Zusammenbau von Aggregateträger 1 und Außenbaugruppe 2 an einem dieser beiden Teile, insbesondere am Aggregateträger 1, vormontiert sein. Es ist dann nicht erforderliche, an dem Montageplatz, an dem der Aggregateträger 1 und die Außenbaugruppe 2 miteinander verbunden werden, noch separate Befestigungsmittel zur Verfügung zu stellen.

Die Türinnenverkleidung, mit der der Aggregateträger 1 zum Fahrzeuginnenraum hin abgedeckt wird, kann im Bereich der Schnittstelle von Aggregateträger 1 und Außenbaugruppe 2 befestigt sein, wobei sie z.B. die Verstärkungsbereiche 15, 21 bis 24 an deren Rand zumindest teilweise umgreift. Hierdurch wird ein Hinterschnitt gebildet, der eine einfache und sichere Befestigung der Türinnenverkleidung ermöglicht. Die Fixierung der Türinnenverkleidung am Rand der Verstärkungsbereiche kann formschlüssig, kraftschlüssig oder unter Verwendung zusätzlicher Befestigungsmittel erfolgen.

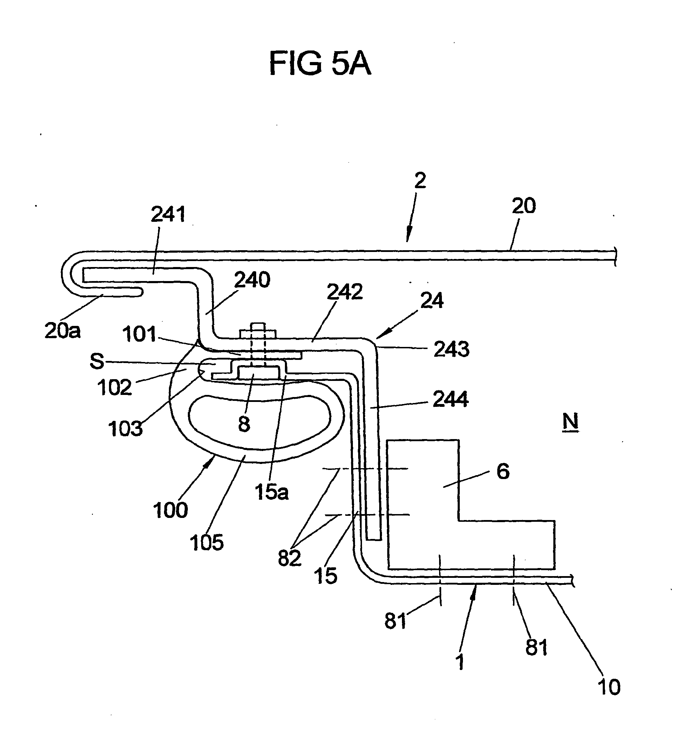

Fig. 5a zeigt eine Weiterbildung der Anordnung aus den Figuren 4a und 4b, wobei zusätzlich eine Schlossbaugruppe 6 im Bereich der hinteren Stirnseite der Fahrzeugtür angeordnet ist.

Der in Figur 5a dargestellte Ausschnitt einer Fahrertür eines Kraftfahrzeugs im Bereich der hinteren Stirnseite zeigt konkret eine Außenbaugruppe 2 mit einer Türaußenhaut 20, die an ihrem umgelegten Rand 20a einen Verstärkungsbereich 24 eines separaten Verstärkungsbleches bzw. Verstärkungsrahmens umgreift und hierdurch mit diesem verbunden ist.

Der Verstärkungsbereich 24 umfasst einen Abschnitt 240, der einen Bestandteil der Stirnseite der Fahrzeugtür bildet und sich im Wesentlichen senkrecht zu der Türaußenhaut 20 erstreckt. Hiervon abgewinkelt ist ein Abschnitt 241, der in den umgelegten Rand 20a der Türaußenhaut 20 eingreift, sowie ein zweiter Abschnitt 242, der der Verbindung des Verstärkungsbereiches 24 mit dem Aggregateträger 1 mittels einer Schraubverbindung 8 dient. An diesem zweiten abgewinkelten Abschnitt 242 schließt sich noch ein weiterer Abschnitt 244 des hinteren Verstärkungsbereiches 24 an, der wiederum im Wesentlichen senkrecht zu der Türaußenhaut 20 sowie der Trägerplatte 10 des Aggregateträgers 1 ausgerichtet ist und somit gemeinsam mit dem erstgenannten Abschnitt 240 des Verstärkungsbereiches 24 die im Wesentlichen senkrecht zu Trägerplatte 10 und Türaußenhaut 20 verlaufende Stirnseite der Türbaugruppe bildet.

Die beiden abgewinkelten Abschnitte 241, 242 des Verstärkungsbereiches 24 verlaufen dabei jeweils im Wesentlichen parallel zu der Türaußenhaut 20 sowie der Trägerplatte 10 des Aggregateträgers 1

An der Trägerplatte 10 ist ein Verstärkungsbereich 15 nach außen (in Richtung auf die Türaußenhaut 20) abgewinkelt, der sich im Wesentlichen entlang des einen die Stirnseite der Fahrzeugtür definierenden Abschnittes 244 des Verstärkungsbereiches 24 der Außenbaugruppe 2 erstreckt. Hiervon ist wiederum an einem Ende ein Befestigungsbereich 15a abgewinkelt, der sich entlang des der Befestigung am Aggregateträger 1 dienenden Abschnittes 242 des Verstärkungsbereiches 24 erstreckt. Dort sind der Aggregateträger 1 und die Türaußenhaut 2 mittels einer Schraubverbindung 8, umfassend eine Schraube sowie eine zugeordnete Mutter verbunden, wobei die Schraube der Schraubverbindung 8 den Befestigungsbereich 15a des Aggregateträgers 1 sowie den der Befestigung dienenden Abschnitt 242 des Verstärkungsbereiches 24 durchgreift. Der Befestigungsbereich 15a des Aggregateträgers 1 sowie der der Befestigung dienende Abschnitt 242 der Außenbaugruppe 2 bilden in ihrem Überlappungsbereich eine Schnittstelle S, die - ohne Abdeckung - bei geöffneter Fahrzeugtür für einen Betrachter der durch den Verstärkungsbereich 24 gebildeten Stirnseite der Fahrzeugtür sichtbar ist. An dieser Schnittstelle S liegt ein sprunghafter Übergang von der mit Wagenfarbe lackierten Außenbaugruppe 2 zu dem üblicherweise in einer neutralen Farbe lackierten Aggregateträger 1 vor.

Vorliegend ist dieser Übergangsbereich jedoch mittels einer Dichtung 100 abgedichtet und überdeckt, die sich entlang der Schnittstelle S erstreckt und die einen Befestigungsabschnitt 101 in Form eines Fußes der Dichtung 100 aufweist, welcher sich wiederum zwischen dem Befestigungsbereich 15a des Aggregateträgers 1 und dem der Befestigung dienenden Abschnitt 242 des Verstärkungsbereiches 24 erstreckt, zwischen diesen eingeklemmt ist und zusätzlich von der Schraube der vorstehend beschriebenen Schraubverbindung 8 durchgriffen wird. Dabei greift der Befestigungsbereich 15a des Aggregateträgers 1 in eine zwischen dem Dichtungsfuß 101 und dem Dichtkörper 105 gebildete Aussparung 103 der Dichtung 100 ein.

Der Dichtungskörper 105 der Dichtung 100 liegt im geschlossenen Zustand der Fahrzeugtür an der Fahrzeugkarosserie an und dichtet somit den Fahrzeuginnenraum gegenüber dem jenseits der Fahrzeugtür gelegenen Außenraum ab. Dies bewirkt darüber hinaus auch eine Dämpfung von Außengeräuschen. Zudem dichtet die besagte Dichtung 100 auch die Verbindungsstelle (Schnittstelle S) zwischen Aggregateträger 1 und Außenbaugruppe 2 ab.

Anhand Figur 5a ist außerdem erkennbar, dass der Dichtungskörper 105 (Hauptdichtungsbereich) der Dichtung 100 über einen Biege- bzw. Scharnierbereich 102 mit dem Dichtungsfuß 101 verbunden ist. Hierdurch kann der Dichtungskörper 105, welcher die Schraube der Schraubverbindung 8 überdeckt, derart entlang einer Richtung R umgeklappt werden, dass die Schraubverbindung 8 für eine Betätigung durch ein Werkzeug freigegeben ist. Hierdurch lässt sich die Verbindung zwischen Aggregateträger 1 und Außenbaugruppe 2 durch Betätigung der Schraubverbindung 8 mit einem geeigneten Werkzeug lösen, so dass die Außenbaugruppe 2 von dem Aggregateträger 1 abgenommen werden kann und die zwischen Aggregateträger 1 und Außenbaugruppe 2 Im Nassraum N der Fahrzeugtür befindlichen elektrischen und mechanischen Funktionselemente, wie z.B. das Türschloss 6, für Reparatur- bzw. Servicearbeiten zugänglich sind.

Die in Figur 5a dargestellte Schlossbaugruppe 6 eines Türschlosses ist an der Trägerplatte 10 des Aggregateträgers 1 mit schematisch angedeuteten Befestigungsmitteln 81, z.B. in Form von Schrauben, vormontiert. Das heißt, die entsprechende Befestigung zwischen der Schlossbaugruppe 6 und der Trägerplatte 10 erfolgt bereits vor dem Zusammenbau des Aggregateträgers 1 mit der Außenbaugruppe 2. Hierdurch ist die Schlossbaugruppe 6 bereits in ihrer Lage bezüglich des Aggregateträgers 1 fixiert.

Nach der späteren Verbindung des Aggregateträgers 1 mit der Außenbaugruppe 2 über den Verstärkungsbereich 24 erfolgt dann eine zusätzliche Befestigung der Schlossbaugruppe 6 sowohl an dem Aggregateträger 1 als auch an dem Verstärkungsbereich 24 mittels weiterer geeigneter Befestigungselemente 82, z.B. in Form von Schrauben, wobei die Befestigungselemente 82 einerseits den senkrecht zur Trägerplatte 10 abgewinkelten Verstärkungsbereich 15 der Trägerplatte 1 und andererseits den ebenfalls senkrecht zur Trägerplatte 10 abgewinkelten zweiten stirnseitigen Abschnitt 244 des hinteren Verstärkungsbereiches 24 durchgreifen. Hierdurch sind mit diesen weiteren Befestigungsmitteln 82 der Aggregateträger 1 und der Verstärkungsbereich 24 der Außenbaugruppe 2 zusätzlich in einem bezüglich den die Schnittstelle S bildenden Befestigungsbereichen 15aa, 242 abgewinkelten Bereich (beidseits eines Winkels bzw. einer Ecke 243) aneinander befestigt, so dass eine besonders feste Verbindung zwischen dem Aggregateträger 1 und dem Verstärkungsbereich 24 besteht, bei gleichzeitiger Integration der Schlossbaugruppe 6 und einer entsprechend stabilen Halterung der Schlossbaugruppe 6 am Aggregateträger 1 und am Verstärkungsbereich 24 der Außenbaugruppe 2.

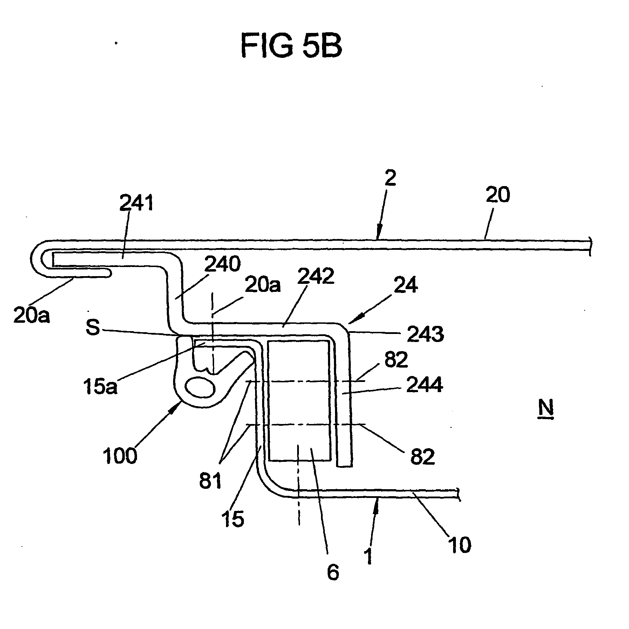

Figur 5b zeigt eine Abwandlung der Anordnung aus Figur 5a, wobei der Unterschied darin besteht, dass die Schlossbaugruppe 6 am abgewinkelten Verstärkungsbereich 15 des Aggregateträgers 1 vormontiert ist und darüber hinaus (nach dem Verbinden von Aggregateträger 1 und Außenbaugruppe 2) an dem zweiten stimseitigen Abschnitt 244 des Verstärkungsbereiches 24 befestigt ist. Dieser zweite stirnseitige Abschnitt 244 des Verstärkungsbereiches 24 verläuft parallel zu dem abgewinkelten Verstärkungsbereich 15 des Aggregateträgers 1 und ist derart von diesem beabstandet, dass die Schlossbaugruppe 6 zwischen dem Verstärkungsbereich 15 des Aggregateträgers 1 und dem zweiten stimseitigen Abschnitt 244 des Verstärkungsbereichs 24 aufgenommen werden kann.

Auch hier sind der Aggregateträger 1 und die Außenbaugruppe 2 bzw. deren Verstärkungsbereich 24 einerseits mittels einer Schraubverbindung 8 entlang zweier parallel zu der Trägerplatte 10 und der Außenhaut 20 verlaufenden, der Befestigung dienenden Bereichen 15a, 242 aneinander befestigt und andererseits (über die Schlossbaugruppe 6) an zwei senkrecht hierzu erstreckten Bereichen 15, 244 der Trägerplatte 1 bzw. des Verstärkungsbereiches 24.

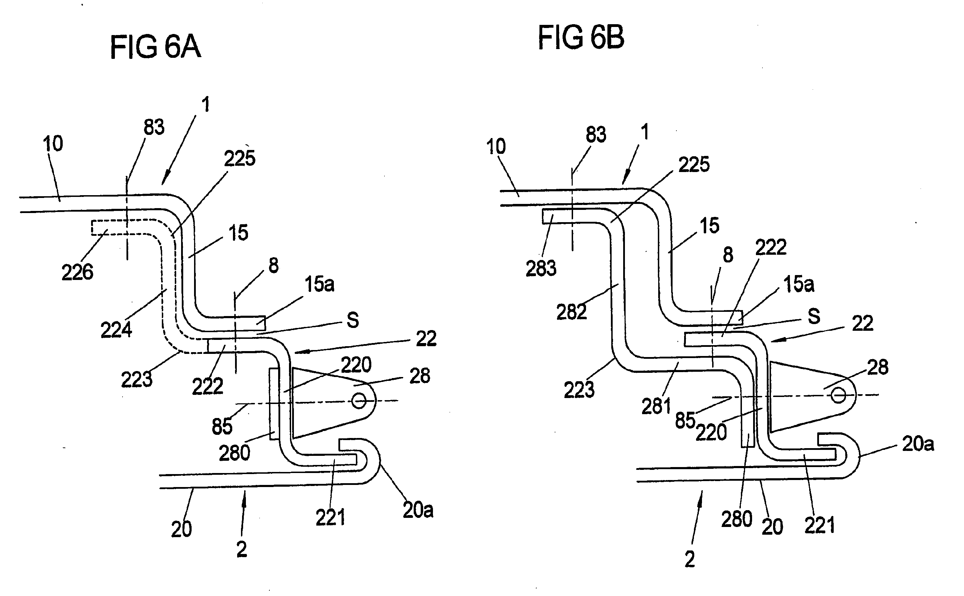

Die Figuren 6a und 6b zeigen jeweils die Befestigung eines Scharnierteiles 28 an der vorderen Stirnseite einer Beifahrertür, die durch einen vorderen Verstärkungsbereich 22 der Außenbaugruppe 2 gebildet wird. Dieser Verstärkungsbereich weist einen im Wesentlichen senkrecht zur Trägerplatte 10 des Aggregateträgers 1 und zur Außenhaut 20 der Außenbaugruppe 2 erstreckten stimseitigen Abschnitt 220 auf, an dem das Scharnierbauteil 28 zu befestigen ist, sowie einen ersten hiervon abgewinkelten Abschnitt 221, der von einem umgelegten Ende 20a der Außenhaut 20 umgriffen wird, und einen zweiten abgewinkelten Abschnitt 222, über den der Verstärkungsbereich 22 mittels einer Schraubverbindung 8 mit dem abgewinkelten Befestigungsbereich 15a der Trägerplatte 1 durch geeignete Befestigungs- bzw. Verbindungsmittel 8 verbunden ist.

Wie in Figur 6a angedeutet, kann der vordere Verstärkungsbereich 22 der Außenbaugruppe 2 noch bis zu der Trägerplatte 10 des Aggregateträgers 1 hin verlängert und dort mittels weiterer Befestigungsmittel 83 fixiert sein. Dementsprechend weist der Verstärkungsbereich 22 zwei weitere sich entlang des Verstärkungsbereiches 15 und der Trägerplatte 10 des Aggregateträgers 1 erstreckende Abschnitte 224 bzw. 226 auf, denen jeweils entsprechende Winkel bzw. Eckabschnitte 223, 225 des Verstärkungsbereiches 22 der Außenbaugruppe 2 zugeordnet sind.

Auf der dem Scharnierteil 28 abgewandten Seite des ersten stirnseitigen Abschnittes 220 des vorderen Verstärkungsbereiches 22 der Außenbaugruppe 2 ist eine plattenartige Schamierverstärkung 280 angeordnet, die von den zur Befestigung des Scharnieres 28 an dem ersten stimseitigen Abschnitt 220 dienenden Befestigungsmitteln 85 zur Stabilisierung der Anbindung des Scharnieres durchdrungen wird.

Anhand Figur 6b wird deutlich, dass diese Schamierverstärkung 280 bis zu der Trägerplatte 10 des Aggregateträgers 1 verlängert sein kann, wobei sie sich mit mehreren winklig zueinander verlaufenden Abschnitten 281, 282, 283 zunächst entlang des Befestigungsbereiches 15a, dann entlang des Verstärkungsbereiches 15 und schließlich entlang der Trägerplatte 10 des Aggregateträgers 1 erstreckt. Dort erfolgt eine zusätzliche Befestigung der Schamierverstärkung 280 am Aggregateträger 1 durch geeignete Befestigungsmittel 83. In diesem Fall ist die anhand Figur 6a erläuterte Verlängerung des vorderen Verstärkungsbereiches 22 der Außenbaugruppe 2 nicht erforderlich.

In den Figuren 6a und 6b ist die Türdichtung 100 nicht mit dargestellt, um zu verdeutlichen, dass die im Überlappungsbereich des Befestigungsbereiches 15a des Aggregateträgers 1 mit dem zugeordneten Abschnitt 222 der Außenbaugruppe 2 gebildete Schnittstelle S für einen Betrachter der Stirnseite der Fahrzeugtür (bei geöffneter Fahrzeugtür) sichtbar ist, wenn er nicht durch eine Dichtung abgedeckt wird.

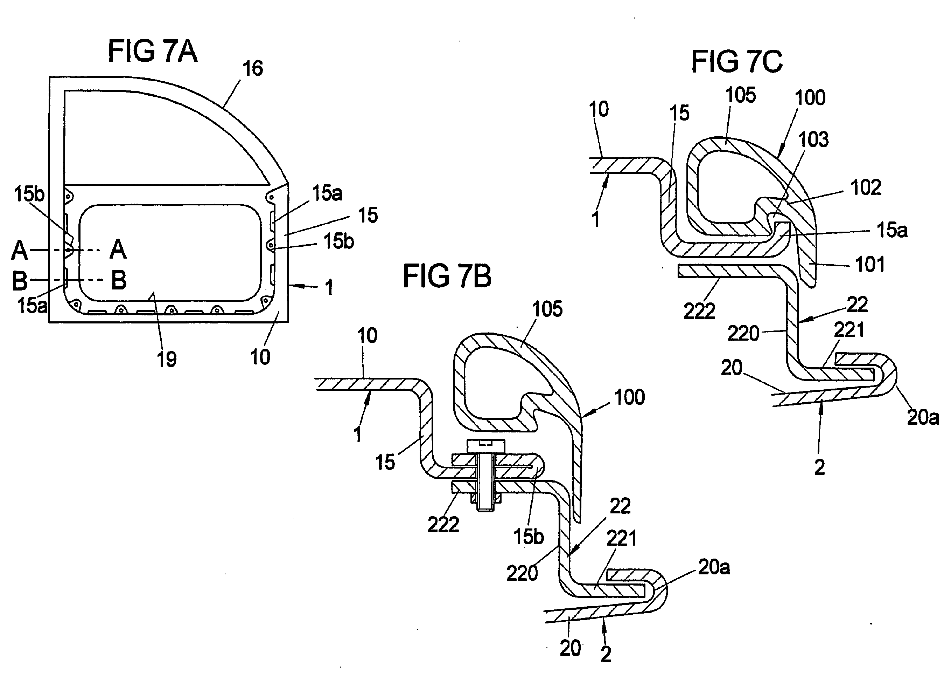

Figur 7a zeigt für eine Beifahrertür einen Aggregateträger 1 mit einer Trägerplatte 10 und einem Fensterrahmen 16, wobei die Trägerplatte 10 einen großflächigen Ausschnitt 19 aufweist, der von einem an der Trägerplatte 10 zu befestigenden Türmodulträger mit daran vormontierten Funktionsgruppen, wie z.B. einem Fensterheber, einem Seitenairbagmodul, einem Lautsprechersystem usw. überdeckbar ist. Bei diesem Ausführungsbeispiel werden also die entsprechenden Funktionskomponenten der Fahrzeugtür nicht unmittelbar an der Trägerplatte 10 des Aggregateträgers 1 vormontiert, sondern vielmehr an einem separaten Türmodulträger, der dann zusammen mit den hieran befestigten Funktionskomponenten an der Trägerplatte 10 montiert wird

Der Aggregateträger 1 weist in seinem U-förmig umlaufenden Verstärkungsbereich 15 in Erstreckungsrichtung hintereinander abwechselnd abgewinkelte Befestigungsbereiche 15a zur Befestigung der Türdichtung 100 durch Aufstecken eines durch eine Aussparung 103 gebildeten Steckbereiches der Türdichtung 100 (vergl. Figur 7c) sowie durch Umlegen des abgewinkelten Endbereiches gebildete doppellagige Befestigungsbereiche 15b zur Bildung einer stabilen, ausreißfesten Verbindung mit dem jeweiligen der Befestigung dienenden Abschnitt (z.B. 222) des Verstärkungsbereiches (z.B. 22) der äußeren Türbaugruppe 2 (vergl. Figur 7b) auf.

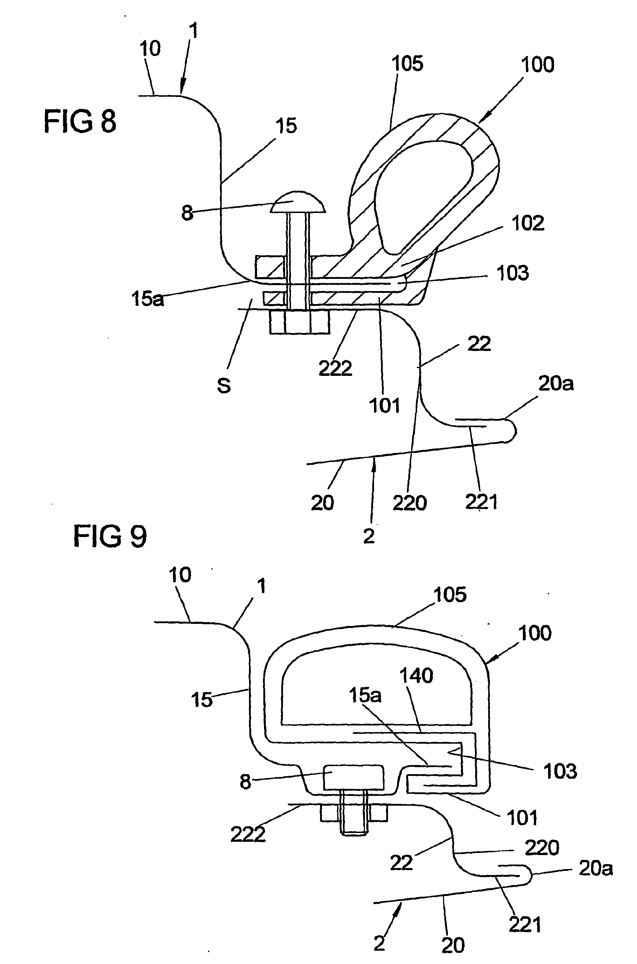

Anhand der Figuren 8 bis 12 werden nachfolgend unterschiedliche Möglichkeiten der Befestigung der Türdichtung 100 an der durch den Aggregateträger 1 und die Außenbaugruppe 2 gebildeten Türbaugruppe erläutert.

Gemäß Figur 8 ist die Türdichtung 100 mit einem zwischen dem Dichtungskörper 105 und dem Dichtungsfuß 101 durch eine Aussparung 103 gebildeten Steckbereich auf den abgewinkelten Befestigungsbereich 15a des Aggregateträgers 1 aufgesteckt und dort zusätzlich mittels der Schraubverbindung 8 fixiert, über die der der Befestigung dienende Abschnitt 222 des vorderen Verstärkungsbereiches 22 der Außenbaugruppe 2 mit dem Befestigungsbereich 15a des Aggregateträgers 1 verbunden ist. Die Dichtung 100 weist ferner zwischen dem Dichtungsfuß 101 und dem Dichtungskörper 105 einen Biege- bzw. Schamierabschnitt 103 auf, so dass sich der Dichtungskörper 105 entlang einer Richtung R weg von den Befestigungsmitteln 8 verschwenken lässt. Hierdurch können diese zur Betätigung durch ein Werkzeug freigegeben werden.

Figur 8 zeigt dabei eine Situation, in der der Dichtungskörper 105 entlang der besagten Schwenkrichtung R von der Schraubverbindung weggeschwenkt ist, so dass die Schraube entnommen werden kann.

Anhand Figur 8 wird ferner deutlich, dass die Schnittstelle S der Verbindung von Aggregateträger 1 und Verstärkungsbereich 22, je nach Blickrichtung, teilweise durch den Dichtungskörper 100, teilweise durch den Biege- bzw. Scharnierbereich 102 und teilweise durch den Fuß 101 der Dichtung 100 abgedeckt ist. Der Dichtungsfuß 101, der sich zwischen dem Befestigungsbereich 15a des Aggregateträgers 1 und dem der Befestigung dienenden Abschnitt 222 des vorderen Verstärkungsbereiches 22 der Außenbaugruppe 2 erstreckt, dichtet dabei die Schnittstelle S zwischen Verstärkungsbereich 222 und Aggregateträger 1 ab.

Bei dem in Figur 9 gezeigten Ausführungsbeispiel wird der durch eine Aussparung 103 gebildete und durch den Dichtungsfuß 101 sowie den Dichtungskörper 105 begrenzte Steckbereich der Dichtung 100, über den die Dichtung 100 auf den Befestigungsbereich 15a des Aggregateträgers 1 gesteckt ist, mittels einer Metalleinlage 140 in Form einer Metallseele verstärkt.

Hierdurch kann die Dichtung 100 mit ihrem Steckbereich 103 so fest auf den Befestigungsbereich 15a in Form eines Befestigungsflansches gesteckt und hiebei durch Klemmen befestigt werden, dass eine zusätzliche Befestigung mittels der Schraubverbindung 8, die zur Verbindung von Aggregateträger 1 und Verstärkungsbereich 22 der Außenbaugruppe 2 dient, nicht erforderlich ist. Der Schraubenkopf der Schraubverbindung ist dementsprechend unterhalb des Dichtungskörpers 105 der Dichtung 100 in einer durch eine Vertiefung gebildeten Ausformung des Befestigungsbereiches 15a des Aggregateträgers 1 versenkt. Zur Freigabe der Schraubverbindung 8 in einem Reparatur- bzw. Servicefall wird hier die Dichtung 100 in einem die Schraubverbindung 8 umgebenen Teilbereich derart von dem Befestigungsbereich 15a (Befestigungsflansch) des Aggregateträgers 1 heruntergeschoben, dass die Schraubverbindung 8 für ein Betätigungswerkzeug zugänglich ist.

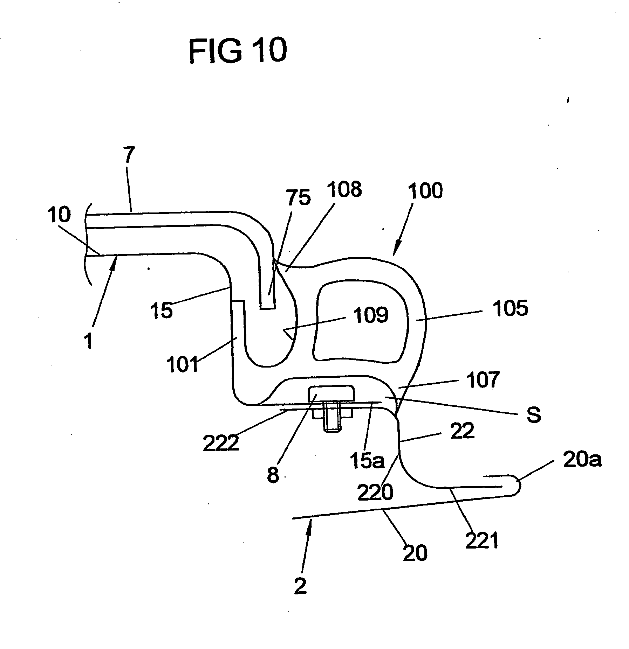

Bei dem in Figur 10 dargestellten Ausführungsbeispiel ist die Dichtung 100 mit ihrem Dichtungsfuß 101 durch Kleben an dem abgewinkelten Verstärkungsbereich 15 des Aggregateträgers 1 befestigt. Sie weist zwei von ihrem Dichtungskörper 105 abstehende Fortsätze 107, 108 in Form von Lippen auf.

Die eine Lippe 107 dient der Überdeckung der Schnittstelle S zwischen Aggregateträger 1 und äußerer Türbaugruppe 2. Die andere Lippe 108 dient zur Überdeckung des abgewinkelten freien Endes 75 einer Türinnenverkleidung 7, die die Trägerplatte 10 des Aggregateträgers 1 zum Fahrzeuginnenraum hin überdeckt. Durch das Abdecken des freien Endes 75 der Türinnenverkleidung 7 mittels der Lippe 108 der Dichtung 100 erübrigt sich ein sauberer Beschnitt des (nicht mehr sichtbaren) abgewinkelten freien Endes 75 der Türinnenverkleidung 7. Ferner können größere Toleranzen hinsichtlich der Anordnung der Türinnenverkleidung 7 am Aggregateträger 1 hingenommen werden. Schließlich kann der abgewinkelte Endabschnitt 75 der Türinnenverkleidung 7 in einer zwischen dem Dichtungsfuß 101 und dem der Türinnenverkleidung 7 zugeordneten Fortsatz 108 der Dichtung 100 gebildeten Aufnahme 109 klapperfrei aufgenommen werden.

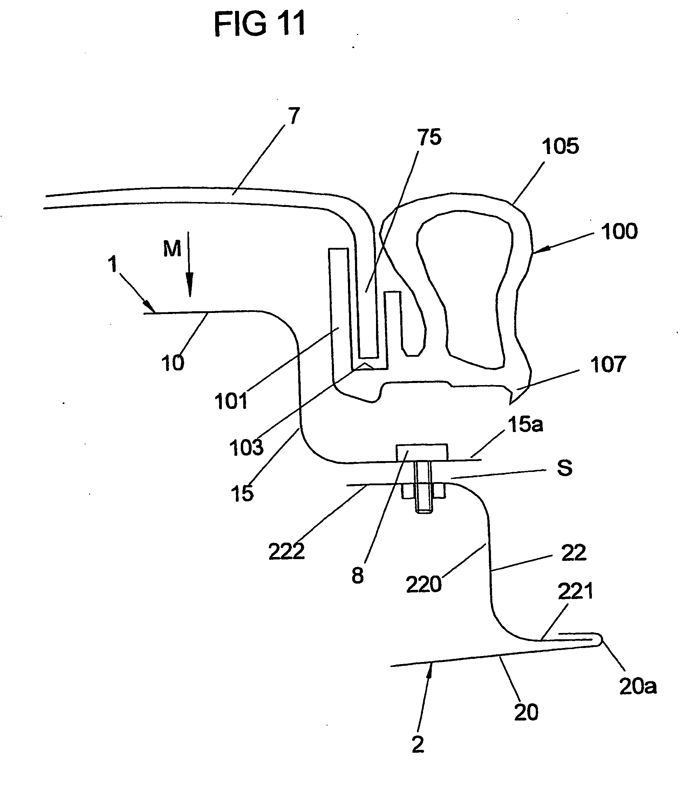

Bei dem in Figur 11 gezeigten Ausführungsbeispiel ist die Dichtung 100 mittels eines zwischen dem Dichtungsfuß 101 und dem Dichtungskörper 105 ausgebildeten Steckbereiches 103 in Form einer Aussparung auf das abgewinkelte Ende 75 einer Türinnenverkleidung 7 aufgesteckt und hierdurch an dieser vormontiert. Beim Aufsetzen der Türinnenverkleidung 7 auf die Trägerplatte 10 des Aggregateträgers 1 entlang einer Montagerichtung M gerät der Dichtungskörper 105 der Dichtung 100 über die Schraubverbindung 8 zwischen Aggregateträger 1 und Außenbaugruppe 2 und überdeckt dabei mit einem Fortsatz 107 in Form einer Dichtungslippe die von außen sichtbare Schnittstelle S zwischen dem Befestigungsbereich 15a (Befestigungsflansch) des Aggregateträgers 1 und dem der Befestigung dienenden abgewinkelten Abschnitt 222 des Verstärkungsbereiches 22 der Außenbaugruppe 2.

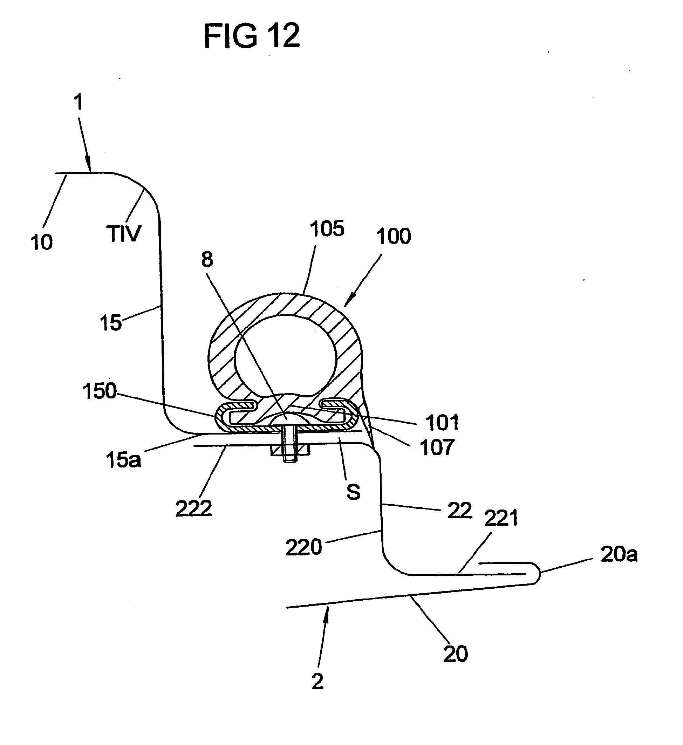

Bei dem Ausführungsbeispiel gemäß Figur 12 ist an dem Befestigungsbereich 15a (Befestigungsflansch) des Aggregateträgers 1 eine zusätzliche, im Wesentlichen C-förmige Schiene 150 befestigt, und zwar mittels der Schraubverbindung 8, die auch der Befestigung des Befestigungsbereiches 15a des Aggregateträgers 1 am Verstärkungsbereich 22 der Außenbaugruppe 2 dient. In dieser Schiene ist die Dichtung 100 formschlüssig gelagert, so dass sie mit ihrem Dichtungskörper 105 , die Schraubverbindung 8 überdeckt und mit einem Fortsatz 107 in Form einer Dichtungslippe die von außen sichtbare Schnittstelle S zwischen Aggregateträger 1 und Außenbaugruppe 2 überdeckt und abdichtet.

## Patentansprüche

1. Kraftfahrzeugtür mit
- einer Außenbaugruppe (2), die eine Türaußenhaut (20) aufweist und eine äußere Designfläche der Kraftfahrzeugtür bildet,
- einem Aggregateträger (1) mit einer Trägerplatte (10), der auf der einem Fahrzeuginnenraum zugewandten Seite der Außenbaugruppe (2) angeordnet ist,
- Verstärkungsbereichen (21, 22, 23, 24) der Außenbaugruppe (2), die im Bereich der äußeren Ränder der Außenbaugruppe (2) vorgesehen sind und als mindestens eine separate Baueinheit an der Türaußenhaut (20) befestigt sind, und
- einer Schnittstelle (S) zwischen dem Aggregateträger (1) und der Außenbaugruppe (2), unter deren Bildung der Aggregateträger (1) über die Verbindungsbereiche (21, 22, 23, 24) mit der Türaußenhaut (20) und damit der Außenbaugruppe (2) verbunden ist,
**dadurch gekennzeichnet,**
**dass** entlang der Schnittstelle (S) von Aggregateträger (1) und Außenbaugruppe (2) eine Dichtung (100) verläuft, die die Schnittstelle (S) zumindest teilweise überdeckt, und dass im Bereich der Schnittstelle (S) Befestigungsmittel (8) zur Verbindung von Aggregateträger (1) und Türaußenbaugruppe (2) vorgesehen sind, von denen zumindest ein Teil durch die Dichtung (100) abgedeckt ist.

2. Kraftfahrzeugtür nach Anspruch 1, **dadurch gekennzeichnet, dass** solche Befestigungsmittel (8) durch die Dichtung (S) abgedeckt sind, die im nicht abgedeckten Zustand an der äußeren Kontur der Kraftfahrzeugtür sichtbar wären.

3. Kraftfahrzeugtür nach Anspruch 1 oder 2, **dadurch gekennzeichnet, dass** sämtliche im Bereich der Schnittstelle (S) befindlichen, sichtbaren Befestigungsmittel (8) mittels der Dichtung (100) überdeckt sind.

4. Kraftfahrzeugtür nach einem der vorhergehenden Ansprüche, **dadurch gekennzeichnet, dass** die Dichtung, (100) eine Hauptdichtung der Kraftfahrzeugtür bildet, über die die Kraftfahrzeugtür im geschlossenen Zustand an der Fahrzeugkarosserie anliegt.

5. Kraftfahrzeugtür nach einem der Ansprüche 1 bis 4, **dadurch gekennzeichnet, dass** die Dichtung (100) oder ein Abschnitt (105) der Dichtung (100) derart bewegbar ist, dass die Befestigungsmittel (8) nicht mehr abgedeckt sind und zur Betätigung mittels eines Werkzeugs frei liegen.

6. Kraftfahrzeugtür nach Anspruch 5, **dadurch gekennzeichnet, dass** der Abschnitt (105) der Dichtung (100) durch Umklappen bewegbar ist.

7. Kraftfahrzeugtür nach Anspruch 5 oder 6, **dadurch gekennzeichnet, dass** die Dichtung (100) einen Schwenkbereich (102) aufweist, um den ein Abschnitt (105) der Dichtung (100) klappbar ist.

8. Kraftfahrzeugtür nach Anspruch 7, **dadurch gekennzeichnet, dass** die Dichtung (100) durch Verschieben bewegbar ist.

9. Kraftfahrzeugtür nach einem der Ansprüche 5 bis 8, **dadurch gekennzeichnet, dass** die Dichtung (100) in eine Position bewegbar ist, in der die Befestigungselemente (8) zur Betätigung mittels eines Werkzeugs frei liegen, wobei die Dichtung weiterhin von der Kraftfahrzeugtür gehalten ist.

10. Kraftfahrzeugtür nach Anspruch 5, 6 und 9, **dadurch gekennzeichnet, dass** die Befestigungsmittel (8) durch Umklappen eines Abschnittes (105) der Dichtung (100) freilegbar sind, wobei mindestens ein weiterer Abschnitt (101, 103) der Dichtung (100) an der Fahrzeugtür fixiert bleibt.

11. Kraftfahrzeugtür nach Anspruch 9 und 10, **dadurch gekennzeichnet, dass** die Dichtung (100) entlang eines Befestigungsbereiches (15a, 150) der Kraftfahrzeugtür derart verschiebbar ist, dass die Befestigungsmittel (8) freigegeben werden, ohne die Dichtung (100) vollständig von dem Befestigungsbereich (15a, 150) zu lösen.

12. Kraftfahrzeugtür nach einem der vorhergehenden Ansprüche, **dadurch gekennzeichnet, dass** an der Kraftfahrzeugtür ein Befestigungsbereich (15a, 150) vorgesehen ist, an dem die Dichtung (100) formschlüssig befestigbar ist.

13. Kraftfahrzeugtür nach Anspruch 12, **dadurch gekennzeichnet, dass** die Dichtung (100) zur Bildung einer Steckverbindung auf oder in den Befestigungsbereich (15a, 150) steckbar ist.

14. Kraftfahrzeugtür nach Anspruch 13, **dadurch gekennzeichnet, dass** der Befestigungsbereich (15a) durch einen Befestigungsflansch gebildet wird.

15. Kraftfahrzeugtür nach Anspruch 13, **dadurch gekennzeichnet, dass** der Befestigungsbereich (150) durch eine Befestigungsschiene gebildet wird.

16. Kraftfahrzeugtür nach einem der vorhergehenden Ansprüche, **dadurch gekennzeichnet, dass** die Dichtung (100) mit einem Abschnitt (101) zwischen Aggregateträger (1) und Außenbaugruppe (2) eingeklemmt ist und vorzugsweise eine kontaktkorrosionshemmende Zwischenlage bildet.

17. Kraftfahrzeugtür nach einem der vorhergehenden Ansprüche, **dadurch gekennzeichnet, dass** die Dichtung (100) durch separate Befestigungsmittel (8), insbesondere in Form einer Schraubverbindung, an der Kraftfahrzeugtür befestigt ist.

18. Kraftfahrzeugtür nach einem der vorhergehenden Ansprüche, **dadurch gekennzeichnet, dass** die Dichtung (100) eine Metalleinlage (140) aufweist, die einen Befestigungsabschnitt (103) der Dichtung (100) umfasst.

19. Kraftfahrzeugtür nach einem der vorhergehenden Ansprüche, **dadurch gekennzeichnet, dass** die Dichtung (100) vor dem Zusammenbau von Aggregateträger (1) und Außenbaugruppe (2) an dem Aggregateträger (1) vormontierbar ist.

20. Kraftfahrzeugtür nach Anspruch 19, **dadurch gekennzeichnet, dass** die Dichtung (100) in einer Vormontageposition an dem Aggregateträger (1) festlegbar ist und nach dem Verbinden von Außenbaugruppe (2) und Aggregateträger (1) aus der Vormontageposition in ihre Funktionsposition überführbar, insbesondere verschiebbar, ist.

21. Kraftfahrzeugtür nach Anspruch 19, **dadurch gekennzeichnet, dass** die Dichtung (100) in ihrer Funktionsposition an dem Aggregateträger (1) vormontiert ist und sich zum Verbinden der Außenbaugruppe (2) mit dem Aggregateträger (1) derart bewegen, insbesondere umklappen oder verschieben, lässt, dass Befestigungsstellen zur Verbindung von Außenbaugruppe (2) und Aggregateträger (1) freigegeben werden.

22. Kraftfahrzeugtür nach einem der Ansprüche 14 bis 18, **dadurch gekennzeichnet, dass** die Dichtung (100) erst nach Verbindung von Außenbaugruppe (2) und Aggregateträger (1) an der Kraftfahrzeugtür anzuordnen ist.

23. Kraftfahrzeugtür nach einem der Ansprüche 14 bis 22, **dadurch gekennzeichnet, dass** am Aggregateträger (1), insbesondere in dessen Randbereich, Formschlusselemente (15a) vorgesehen, insbesondere angeformt, sind, über die die Dichtung (100) formschlüssig an dem Aggregateträger (1) festlegbar ist.

24. Kraftfahrzeugtür nach einem der vorhergehenden Ansprüche, **dadurch gekennzeichnet, dass** am Aggregateträger (1) eine Türinnenverkleidung (7), gegebenenfalls einschließlich randseitiger Blenden, angeordnet ist.

25. Kraftfahrzeugtür nach Anspruch 24, **dadurch gekennzeichnet, dass** die Türinnenverkleidung den Aggregateträger (1) im Sichtbereich abdeckt.

26. Kraftfahrzeugtür nach Anspruch 24 oder 25, **dadurch gekennzeichnet, dass** die Dichtung (100) die Schnittstelle zwischen Aggregateträger (1) und Türinnenverkleidung (7) abdeckt.

27. Kraftfahrzeugtür nach Anspruch 26, **dadurch gekennzeichnet, dass** die Schnittstelle mit einem von der Dichtung (100) abstehenden Fortsatz (108) abgedeckt wird.

28. Kraftfahrzeugtür nach einem der Ansprüche 24 bis 26, **dadurch gekennzeichnet, dass** die Dichtung (100) an der Türinnenverkleidung (7) befestigt ist.

29. Kraftfahrzeugtür nach einem der vorhergehenden Ansprüche, **dadurch gekennzeichnet, dass** zumindest ein Teil der elektrischen oder mechanischen Funktionselemente (3, 4, 5, 6) auf einer der Außenbaugruppe (2) zugewandten Oberfläche des Aggregateträgers (1) angeordnet ist, so dass die Funktionselemente (3, 4, 5, 6) zwischen der Außenbaugruppe (2) und dem Aggregateträger (1) angeordnet sind.

30. Kraftfahrzeugtür nach einem der vorhergehenden Ansprüche, **dadurch gekennzeichnet, dass** die Verstärkungsbereiche (21 bis 24) von der Außenbaugruppe (2) nach innen abstehen.

31. Kraftfahrzeugtür nach einem der vorhergehenden Ansprüche, **dadurch gekennzeichnet, dass** die Verstärkungsbereiche (21 bis 24) am Rand der Außenbaugruppe (2) umlaufen.

32. Kraftfahrzeugtür nach einem der vorhergehenden Ansprüche, **dadurch gekennzeichnet, dass** an der Außenbaugruppe (2) ein Querträger (25) zur Versteifung der Außenbaugruppe (2) vorgesehen ist.

33. Kraftfahrzeugtür nach einem der vorhergehenden Ansprüche, **dadurch gekennzeichnet, dass** in den Aggregateträger (1) ein Fensterrahmen (16) integriert ist.

34. Kraftfahrzeugtür nach einem der vorhergehenden Ansprüche, **dadurch gekennzeichnet, dass** die Außenbaugruppe (2) und der Aggregateträger (1) unterschiedliche Farben aufweisen.

35. Kraftfahrzeugtür nach einem der vorhergehenden Ansprüche, **dadurch gekennzeichnet, dass** sich der Aggregateträger (1) im Wesentlichen bis zu den seitlichen Rändern der Kraftfahrzeugtür erstreckt.

36. Kraftfahrzeugtür nach einem der vorhergehenden Ansprüche, **dadurch gekennzeichnet, dass** der Aggregateträger (1) im Bereich seiner äußeren Ränder Verstärkungsbereiche (15) aufweist.

37. Kraftfahrzeugtür nach Anspruch 36, **dadurch gekennzeichnet, dass** die Verstärkungsbereiche (15) an dem Aggregateträger (1) zumindest teilweise umlaufend ausgebildet sind und vorzugsweise nach außen abstehen.

38. Kraftfahrzeugtür nach Anspruch 36 oder 37, **dadurch gekennzeichnet, dass** der Verstärkungsbereich (15) am Rand des Aggregateträgers (1) im Wesentlichen U-förmig umläuft.

39. Kraftfahrzeugtür nach einem der Ansprüche 36 bis 38. **dadurch gekennzeichnet, dass** der Aggregateträger (1) aus Metall, insbesondere Blech, besteht und die Verstärkungsbereiche (15) an dem Aggregateträger (1) angeformt sind, insbesondere durch Prägen oder Tiefziehen.

40. Kraftfahrzeugtür nach einem der Ansprüche 36 bis 39, **dadurch gekennzeichnet, dass** der Aggregateträger (1) und die Außenbaugruppe (2) mit ihren Verstärkungsbereichen (15, 21 bis 24) aneinander anliegen.

41. Kraftfahrzeugtür nach einem der Ansprüche 36 bis 40, **dadurch gekennzeichnet, dass** an den Verstärkungsbereichen (15, 22 bis 24) von Aggregateträger (1) und Außenbaugruppe (2) Befestigungsstellen zur Verbindung der Außenbaugruppe (2) mit dem Aggregateträger (1) vorgesehen sind.

42. Kraftfahrzeugtür nach einem der vorhergehenden Ansprüche, **dadurch gekennzeichnet, dass** der Aggregateträger (1) und die Außenbaugruppe (2) entlang eines im Querschnitt mindestens einfach abgewinkelten Überlappungsbereiches (222, 224, 226, 10, 15, 15a; 242, 244, 15, 15a) aneinander befestigt sind.

43. Kraftfahrzeugtür nach einem der vorhergehenden Ansprüche, **dadurch gekennzeichnet, dass** an dem Aggregateträger (1) eine Schlossbaugruppe (6) eines Türschlosses vormontiert ist.

44. Kraftfahrzeugtür nach einem der vorhergehenden Ansprüche, **dadurch gekennzeichnet, dass** eine Schlossbaugruppe (6) eines Türschlosses an einem Überlappungsbereich (224, 15; 244, 15) von Außenbaugruppe (2) und Aggregateträger (1) befestigt ist.

45. Kraftfahrzeugtür nach einem der vorhergehenden Ansprüche, **dadurch gekennzeichnet, dass** an der Kraftfahrzeugtür mindestens ein Scharnierteil (28) eines Türscharnieres befestigt ist.

46. Kraftfahrzeugtür nach Anspruch 45, **dadurch gekennzeichnet, dass** das Scharnierteil an einem Überlappungsbereich von Aggregateträger (1) und Außenbaugruppe (2) befestigt ist.

47. Kraftfahrzeugtür nach Anspruch 45, **dadurch gekennzeichnet, dass** das Scharnierteil (28) in einem Überlappungsbereich (220, 280) der Außenbaugruppe (2) mit einer Scharnierverstärkung (280) befestigt ist.

48. Kraftfahrzeugtür nach einem der vorhergehenden Ansprüche, **dadurch gekennzeichnet, dass** der Aggregateträger (1) zumindest an einem Teil der zur Verbindung mit der Außenbaugruppe (2) dienenden Befestigungsstellen (15b) derart umgelegt ist, dass das Material des Aggregateträgers (1) dort doppellagig vorliegt.

49. Kraftfahrzeugtür nach Anspruch 47, **dadurch gekennzeichnet, dass** der Rand des Aggregateträgers (1) zwischen den doppellagig ausgebildeten Befestigungsstellen (15b) zur Aufnahme der Dichtung (100) ausgebildet ist.

## Claims

1. Motor vehicle door with
- an outer module (2) which has a door outer shell (20) and forms an outer design surface of the vehicle door, and
- a unit carrier (1) with a carrier plate (10), which is arranged on a side of the outer module (2) facing the interior of the vehicle,
- reinforcement areas (21,22,23,24) of the outer module (2), which are provided in the region of outer borders of the outer module (2) und which are mounted as at least one separate unit on the door outer shell (20), and
- an interface (S) between the unit carrier (1) and the outer module (2), under formation of which the unit carrier (1) is connected via reinforcement areas (21,22,23,24) with the door outer shell (20) and thus with the outer module (2),
**characterised in that**
a sealing member (100) extends along the interface (S) between unit carrier (1) and outer module (2), that covers the interface (S) at least in part, and that fixings (8) are provided in the region of the interface (S) for connecting the unit carrier (1) and the outer module (2), at least a part of which is covered by the sealing member (100).

2. Motor vehicle door according to claim 1 **characterised in that** such fixings (8) which would be visible on the outer contour of the vehicle door in the uncovered state are covered by the sealing member (S).

3. Motor vehicle door according to claim 1 or 2 **characterised in that** all the visible fixings (8) located in the region of the interface (S) are covered by means of the sealing member (100).

4. Motor vehicle door according to one of the preceding claims **characterised in that** the sealing member (100) forms a main seal of the vehicle door through which the vehicle door in the closed state bears against the vehicle body.

5. Motor vehicle door according to one of claims 1 to 4 **characterised in that** the sealing member (100) or a section (105) of the sealing member (100) can be moved so that the fixings (8) are no longer covered and are exposed for actuation by means of a tool.

6. Motor vehicle door according to claim 5 **characterised in that** the section (105) of the sealing member (100) can be moved by folding it round.

7. Motor vehicle door according to claim 5 or 6 **characterised in that** the sealing member (100) has a pivotal region (102) about which a section (105) of the sealing member (100) can be folded.

8. Motor vehicle door according to claim 7 **characterised in that** the sealing member (100) can be moved by sliding displacement.

9. Motor vehicle door according to one of claims 5 to 8 **characterised in that** the sealing member (100) can be moved into a position in which the fixing elements (8) are exposed for actuation by means of a tool whereby the sealing member is held by the vehicle door.

10. Motor vehicle door according to claim 5, 6 and 9 **characterised in that** the fixings (8) can be exposed by folding round one section (105) of the sealing member (100) whereby at least a further section (101, 103) of the sealing member (100) remains fixed on the vehicle door.

11. Motor vehicle door according to claim 9 and 10 **characterised in that** the sealing member (100) can be displaced along a fixing region (15a, 150) of the motor vehicle door so that the fixings (8) are released without having to remove the sealing member (100) completely from the fixing region (15a, 150).

12. Motor vehicle door according to one of the preceding claims **characterised in that** a fixing region (15a, 150) is provided on the vehicle door to which the seal (100) can be fixed through positive locking connection.

13. Motor vehicle door according to claim 12 **characterised in that** the sealing member (100) can be pushed onto or into the fixing region (15a, 150) in order to form a push-fit connection.

14. Motor vehicle door according to claim 13 **characterised in that** the fixing region (15a) is formed through a fixing flange.

15. Motor vehicle door according to claim 13 **characterised in that** the fixing region (15) is formed through a fixing rail.

16. Motor vehicle door according to one of the preceding claims **characterised in that** the sealing member (100) is clamped with a section (101) between the unit carrier (1) and outer module (2) and preferably forms an anti contact corrosion intermediate layer.

17. Motor vehicle door according to one of the preceding claims **characterised in that** the sealing member (100) is fixed on the motor vehicle door by separate fixings (8), more particularly in the form of a screw connection.

18. Motor vehicle door according to one of the preceding claims, **characterised in that** the sealing member (100) has a metal insert (140) which comprises a fixing section (103) of the sealing member (100).

19. Motor vehicle door according to one of the preceding claims **characterised in that** the sealing member (100) can be prefitted on the unit carrier (1) before the unit carrier (1) and outer module (2) are fitted together.

20. Motor vehicle door according to claim 19 **characterised in that** the sealing member (100) can be fixed in a pre-assembly position on the unit carrier (1) and once the outer module (2) and unit carrier (1) have been connected together can be moved, more particularly slid from the pre-assembly position into its functioning position.

21. Motor vehicle door according to claim 19 **characterised in that** the sealing member (100) is prefitted on the unit carrier (1) in its functioning position and in order to connect the outer module (2) to the unit carrier (1) can be moved, more particularly folded round or pushed along so that fixing points are exposed for connecting the outer module (2) to the unit carrier (1).

22. Motor vehicle door according to one of claims 14 to 18 **characterised in that** the sealing member (100) is only to be mounted on the vehicle door after the outer module (2) and unit carrier (1) have been connected together.

23. Motor vehicle door according to one of claims 14 to 22 **characterised in that** positive locking elements (15a) are provided, more particularly moulded on the unit carrier (1), more particularly on the edge area thereof through which the sealing member (100) can be fixed with positive engagement on the unit carrier (1).

24. Motor vehicle door according to one of the preceding claims **characterised in that** a door inside trim (7), where necessary including edge fascia panels, is mounted on the unit carrier (1).

25. Motor vehicle door according to claim 24 **characterised in that** the door inside trim covers the unit carrier (1) in the visible area.

26. Motor vehicle door according to claim 24 or 25 **characterised in that** the sealing member (100) covers the interface between the unit carrier (1) and door inside trim (7).

27. Motor vehicle door according to claim 26 **characterised in that** the interface is covered by a projection (108) protruding from the sealing member (100).

28. Motor vehicle door according to one of claims 24 to 26 **characterised in that** the sealing member (100) is fixed on the door inside trim (7).

29. Motor vehicle door according to one of the preceding claims **characterised in that** at least a part of the electrical or mechanical function elements (3,4,5,6) is mounted on a surface of the unit carrier (1) facing the outer module (2) so that the function elements (3,4,5,6) are mounted between the outer module (2) and the unit carrier (1).

30. Motor vehicle door according to one of the preceding claims **characterised in that** the reinforcement areas (21 to 24) protrude inwards from the outer module (2).

31. Motor vehicle door according to one of the preceding claims **characterised in that** the reinforcement areas (21 to 24) run along the edge of the outer module (2).

32. Motor vehicle door according to one of the preceding claims **characterised in that** a cross support (25) for strengthening the outer module (2) is provided on the outer module (2).

33. Motor vehicle door according to one of the preceding claims **characterised in that** a window frame (16) is integrated in the unit carrier (1).

34. Motor vehicle door according to one of the preceding claims **characterised in that** the outer module (2) and unit carrier (1) have different colours.

35. Motor vehicle door according to one of the preceding claims **characterised in that** the unit carrier (1) extends substantially up to the side edges of the motor vehicle door.

36. Motor vehicle door according to one of the preceding claims **characterised in that** the unit carrier (1) has reinforcement areas (15) in the region of its outer edges.

37. Motor vehicle door according to claim 36 **characterised in that** the reinforcement areas (15) are formed at least in part around the periphery of the unit carrier (1) and preferably protrude outwards.

38. Motor vehicle door according to claim 36 or 37 **characterised in that** the reinforcement area (15) runs substantially U-shaped around the edge of the unit carrier (1).

39. Motor vehicle door according to one of claims 36 to 38 **characterised in that** the unit carrier (1) is made of metal, more particularly sheet metal, and the reinforcement areas (15) are formed on the unit carrier (1) more particularly by stamping or deep-drawing.

40. Motor vehicle door according to one of claims 36 to 39 **characterised in that** the unit carrier (1) and the outer module (2) bear against one another through their reinforcement areas (15, 21 to 24).

41. Motor vehicle door according to one of claims 36 to 40 **characterised in that** fixing points for connecting the outer module (2) to the unit carrier (1) are provided on the reinforcement areas (15, 22 to 24) of the unit carrier (1) and outer module (2).

42. Motor vehicle door according to one of the preceding claims **characterised in that** the unit carrier (1) and the outer module (2) are fixed against each other along an overlapping area (222, 224, 226, 10, 15, 15a; 242, 244, 15, 15a) which in cross-section is angled at least once.

43. Motor vehicle door according to one of the preceding claims **characterised in that** a lock module (6) of a door lock is prefitted on the unit carrier (1).

44. Motor vehicle door according to one of the preceding claims **characterised in that** a lock module (6) of a door lock is fixed on an overlapping area (224; 15; 244, 15) of the outer module (2) and unit carrier (1).

45. Motor vehicle door according to one of the preceding claims **characterised in that** at least one hinge part (28) of a door hinge is fixed on the motor vehicle door.

46. Motor vehicle door according to claim 45 **characterised in that** the hinge part is fixed on an overlapping area of the unit carrier (1) and outer module (2).

47. Motor vehicle door according to claim 45 **characterised in that** the hinge part (28) is fixed to a hinge reinforcement (280) in an overlap area (220, 280) of the outer module (2).

48. Motor vehicle door according to one of the preceding claims **characterised in that** the unit carrier (1) is turned over at least at a part of the fixing points (15b) used to connect with the outer module (2) so that the material of the unit carrier (1) becomes double-layered at this point.

49. Motor vehicle door according to claim 47 **characterised in that** the edge of the unit carrier (1) between the double-layered fixing points (15b) is designed to receive the sealing member (100).

## Revendications

1. Portière de véhicule automobile, comprenant :
- un sous-ensemble extérieur (2) qui forme une peau extérieure de portière (20) et une surface décorative extérieure de la portière de véhicule automobile,
- une porte-accessoires (1) avec une plaque porteuse (10) qui est agencé sur un côté du sous-ensemble extérieur (2) tournée vers l'habitacle du véhicule automobile,
- des zones de renforcement (21, 22, 23, 24) du sous-ensemble extérieur (2), prévues dans la zone des bordures extérieures du sous-ensemble extérieur (2) et fixées sur la peau extérieure de portière (20) sous la forme d'au moins une unité structurelle séparée, et
- une interface (S) entre le porte-accessoires (1) et le sous-ensemble extérieur (2), grâce à la formation de laquelle le porte-accessoires (1) est relié, via les zones de liaison (21, 22, 23, 24), à la peau extérieure de portière (20) et ainsi au sous-ensemble extérieur (2),
**caractérisée en ce qu'**
un joint s'étend le long de l'interface (S) du porte-accessoires (1) et du sous-ensemble extérieur (2) (100), qui recouvre au moins partiellement l'interface (S), et **en ce que** dans la zone de l'interface (S) des moyens de fixation (8) sont prévus pour la liaison du porte-accessoires (1) et du sous-ensemble extérieur (2), dont au moins une partie est recouverte par le joint (100).

2. Portière de véhicule automobile selon la revendication 1, **caractérisée en ce que** ceux des moyens de fixation (8) qui sont recouverts par le joint (S) sont ceux qui seraient visibles, au niveau du contour extérieur de la portière de véhicule automobile, dans la situation non couverte.

3. Portière de véhicule automobile selon la revendication 1 ou 2, **caractérisée en ce que** la totalité des moyens de fixation visibles (8) qui se trouvent dans la zone de l'interface (S) sont recouverts au moyen du joint (100).

4. Portière de véhicule automobile selon l'une des revendications précédentes, **caractérisée en ce que** le joint (100) forme un joint principal de la portière de véhicule automobile via lequel la portière de véhicule automobile s'applique contre la carrosserie du véhicule automobile dans la situation fermée.

5. Portière de véhicule automobile selon l'une des revendications 1 à 4, **caractérisée en ce que** le joint (100), ou un tronçon (105) du joint (100), est mobile de telle façon que les moyens de fixation (8) ne sont plus recouverts et sont dégagés pour l'actionnement au moyen d'un outil.

6. Portière de véhicule automobile selon la revendication 5, **caractérisée en ce que** le tronçon (105) du joint (100) est mobile par rabattement.

7. Portière de véhicule automobile selon la revendication 5 ou 6, **caractérisée en ce que** le joint (100) comporte une zone de pivotement (102) autour de laquelle un tronçon (105) du joint (100) peut être basculé.

8. Portière de véhicule automobile selon la revendication 7, **caractérisée en ce que** le joint (100) est mobile par translation.

9. Portière de véhicule automobile selon l'une des revendications 5 à 8, **caractérisée en ce que** le joint (100) est mobile jusque dans une position dans laquelle les éléments de fixation (8) sont dégagés pour l'actionnement au moyen d'un outil, et dans laquelle le joint est toujours maintenu par la portière de véhicule automobile.

10. Portière de véhicule automobile selon la revendication 5, 6 et 9, **caractérisée en ce que** les moyens de fixation (8) sont susceptibles d'être dégagés par rabattement d'un tronçon (105) du joint (100), et dans laquelle au moins un autre de tronçon (101, 103) du joint (100) reste fixé à la portière de véhicule automobile.

11. Portière de véhicule automobile selon la revendication 9 et 10, **caractérisée en ce que** le joint (100) est susceptible d'être déplacé en translation le long d'une zone de fixation (15a, 150) de la portière de véhicule automobile de telle façon que les moyens de fixation (8) deviennent dégagés sans détacher le joint (100) complètement de la zone de fixation (15a, 150).

12. Portière de véhicule automobile selon l'une des revendications précédentes, **caractérisée en ce qu'**il est prévu sur la portière de véhicule automobile une zone de fixation (15a, 150) sur laquelle le joint (100) peut être fixé par coopération de formes.

13. Portière de véhicule automobile selon la revendication 12, **caractérisée en ce que** le joint (100) est susceptible d'être enfiché sur ou dans la zone de fixation (15a, 150) pour former une liaison à enfichage.

14. Portière de véhicule automobile selon la revendication 13, **caractérisée en ce que** la zone de fixation (15a) est formée par une bride de fixation.

15. Portière de véhicule automobile selon la revendication 13, **caractérisée en ce que** la zone de fixation (150) est formée par un rail de fixation.

16. Portière de véhicule automobile selon l'une des revendications précédentes, **caractérisée en ce que** le joint (100) est pincé avec un tronçon (101) entre le porte-accessoires (1) et le sous-ensemble extérieur (2), et forme de préférence une couche intermédiaire qui s'oppose à la corrosion par contact.

17. Portière de véhicule automobile selon l'une des revendications précédentes, **caractérisée en ce que** le joint (100) est fixé sur la portière de véhicule automobile par des moyens de fixation séparés (8), en particulier sous la forme d'une liaison vissée.

18. Portière de véhicule automobile selon l'une des revendications précédentes, **caractérisée en ce que** le joint (100) comprend un insert métallique (140) qui inclut un tronçon de fixation (103) du joint (100).

19. Portière de véhicule automobile selon l'une des revendications précédentes, **caractérisée en ce que** le joint (100) est susceptible d'être prémonté sur le porte-accessoires (1) avant l'assemblage du porte-accessoires (1) et du sous-ensemble extérieur (2).

20. Portière de véhicule automobile selon la revendication 19, **caractérisée en ce que** le joint (100) peut être immobilisé sur le porte-accessoires (1) dans une position de prémontage, et après la liaison du sous-ensemble extérieur (2) et du porte-accessoires (1), il peut être transféré de la position de prémontage jusque dans sa position fonctionnelle, en particulier par translation.

21. Portière de véhicule automobile selon la revendication 19, **caractérisée en ce que** le joint (100) est prémonté sur le porte-accessoires (1) dans sa position fonctionnelle, et peut être déplacé, en particulier par rabattement ou par translation, en vue de la liaison du sous-ensemble extérieur (2) avec le porte-accessoires (1), de telle manière que des emplacements de fixation pour la liaison du sous-ensemble extérieur (2) et du porte-accessoires (1) deviennent dégagés.

22. Portière de véhicule automobile selon l'une des revendications 14 à 18, **caractérisée en ce que** le joint (100) doit être agencé sur la portière de véhicule automobile uniquement après la liaison du sous-ensemble extérieur (2) et du porte-accessoires (1).

23. Portière de véhicule automobile selon l'une des revendications 14 à 22, **caractérisée en ce que** des éléments à coopération de formes (15a) sont prévus et en particulier conformés sur le porte-accessoires (1) et en particulier dans sa zone de bordure, au moyen desquels le joint (100) peut être immobilisé sur le porte-accessoires (1) par coopération de formes.

24. Portière de véhicule automobile selon l'une des revendications précédentes, **caractérisée en ce qu'**un habillage intérieur de portière (7) est agencé sur le porte-accessoires (1), le cas échéant y compris des caches du côté de la bordure.

25. Portière de véhicule automobile selon la revendication 24, **caractérisée en ce que** l'habillage intérieur de portière recouvre le porte-accessoires (1) dans la zone visible.

26. Portière de véhicule automobile selon la revendication 24 ou 25, **caractérisée en ce que** le joint (100) recouvre l'interface entre le porte-accessoires (1) et l'habillage intérieur de portière (7).

27. Portière de véhicule automobile selon la revendication 26, **caractérisée en ce que** l'interface est recouverte avec un prolongement (108) qui dépasse depuis le joint (100).

28. Portière de véhicule automobile selon l'une des revendications 24 à 26, **caractérisée en ce que** le joint (100) est fixé sur l'habillage intérieur de portière (7).

29. Portière de véhicule automobile selon l'une des revendications précédentes, **caractérisée en ce qu'**au moins une partie des éléments fonctionnels électriques ou mécaniques (3, 4, 5, 6) sont agencés sur une surface du porte-accessoires (1) tournée vers le sous-ensemble extérieur (2), de sorte que les éléments fonctionnels (3, 4, 5, 6) sont agencés entre le sous-ensemble extérieur (2) et le porte-accessoires (1).

30. Portière de véhicule automobile selon l'une des revendications précédentes, **caractérisée en ce que** les zones de renforcement (21 à 24) dépassent du sous-ensemble extérieur (2) vers l'intérieur.

31. Portière de véhicule automobile selon l'une des revendications précédentes, **caractérisée en ce que** les zones de renforcement (21 à 24) sont en périphérie à la bordure du sous-ensemble extérieur (2).

32. Portière de véhicule automobile selon l'une des revendications précédentes, **caractérisée en ce qu'**un support transversal (25) est prévu sur le sous-ensemble extérieur (2) pour la rigidification du sous-ensemble extérieur (2).

33. Portière de véhicule automobile selon l'une des revendications précédentes, **caractérisée en ce qu'**un cadre de fenêtre (16) est intégré dans le porte-accessoires (1).

34. Portière de véhicule automobile selon l'une des revendications précédentes, **caractérisée en ce que** le sous-ensemble extérieur (2) et le porte-accessoires (1) présentent des couleurs différentes.

35. Portière de véhicule automobile selon l'une des revendications précédentes, **caractérisée en ce que** le porte-accessoires (1) s'étend sensiblement jusqu'aux bordures latérales de la portière de véhicule automobile.

36. Portière de véhicule automobile selon l'une des revendications précédentes, **caractérisée en ce que** le porte-accessoires (1) présente des zones de renforcement (15) dans la région de ses bordures extérieures.

37. Portière de véhicule automobile selon la revendication 36, **caractérisée en ce que** les zones de renforcement (15) sont réalisés sur le porte-accessoires (1) au moins partiellement en périphérie, et dépassent de préférence vers l'extérieur.

38. Portière de véhicule automobile selon la revendication 36 ou 37, **caractérisée en ce que** la zone de renforcement (15) s'étend sensiblement en forme de U en périphérie à la bordure du porte-accessoires (1).

39. Portière de véhicule automobile selon l'une des revendications 36 à 38, **caractérisée en ce que** le porte-accessoires (1) est en métal, en particulier en tôle, et les zones de renforcement (15) sont conformées sur le porte-accessoires (1), en particulier par estampage ou par emboutissage.

40. Portière de véhicule automobile selon l'une des revendications 36 à 39, **caractérisée en ce que** le porte-accessoires (1) et le sous-ensemble extérieur (2) sont appliqués l'un contre l'autre par leurs zones de renforcement (15, 21 à 24).

41. Portière de véhicule automobile selon l'une des revendications 36 à 40, **caractérisée en ce que** des emplacements de fixation destinés à la liaison du sous-ensemble extérieur (2) avec le porte-accessoires (1) sont prévus au niveau des zones de renforcement (15, 22 à 24) du porte-accessoires (1) et du sous-ensemble extérieur (2).

42. Portière de véhicule automobile selon l'une des revendications précédentes, **caractérisée en ce que** le porte-accessoires (1) et le sous-ensemble extérieur (2) sont fixés l'un à l'autre le long d'une zone de chevauchement (222, 224, 226, 10, 15, 15a ; 242, 244, 15, 15a) coudée au moins simplement en section transversale.

43. Portière de véhicule automobile selon l'une des revendications précédentes, **caractérisée en ce qu'**un sous-ensemble de serrure (6) d'une serrure de portière est prémonté sur le porte-accessoires (1).

44. Portière de véhicule automobile selon l'une des revendications précédentes, **caractérisée en ce qu'**un sous-ensemble de serrure (6) d'une serrure de portière est fixé sur une zone de chevauchement (224, 15 ; 244, 15) du sous-ensemble extérieur (2) et du porte-accessoires (1).

45. Portière de véhicule automobile selon l'une des revendications précédentes, **caractérisée en ce qu'**au moins une partie de charnière (28) d'une charnière de portière est fixée sur la portière de véhicule automobile.

46. Portière de véhicule automobile selon la revendication 45, **caractérisée en ce que** la partie de charnière est fixée sur une zone de chevauchement du porte-accessoires (1) et du sous-ensemble extérieur (2).

47. Portière de véhicule automobile selon la revendication 45, **caractérisée en ce que** la partie de charnière (28) est fixée avec un renforcement de charnière (280) dans une zone de chevauchement (220, 280) du sous-ensemble extérieur (2).

48. Portière de véhicule automobile selon l'une des revendications précédentes, **caractérisée en ce que** le porte-accessoires (1) est rabattu au moins sur une partie des emplacements de fixation (15b) qui servent à la liaison avec le sous-ensemble extérieur (2), de telle façon que le matériau du porte-accessoires (1) s'y présente en deux couches.

49. Portière de véhicule automobile selon la revendication 47, **caractérisée en ce que** la bordure du porte-accessoires (1) est réalisée, entre les emplacements de fixation (15b) réalisés en deux couches, en vue de recevoir le joint (100).
